(19) **Europäisches Patentamt / European Patent Office / Office européen des brevets**

(11) **EP 4 746 359 A1**

(12) **EUROPEAN PATENT APPLICATION**
published in accordance with Art. 153(4) EPC

(43) Date of publication:
**20.05.2026 Bulletin 2026/21**

(21) Application number: **24838797.9**

(22) Date of filing: **09.07.2024**

(51) International Patent Classification (IPC):
*H04L 27/26* (2006.01)

(52) Cooperative Patent Classification (CPC):
**H04L 27/26**

(86) International application number:
**PCT/CN2024/104412**

(87) International publication number:
**WO 2025/011545 (16.01.2025 Gazette 2025/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.07.2023 CN 202310856062**

(71) Applicant: **Datang Mobile Communications
Equipment Co., Ltd.
Beijing 100085 (CN)**

(72) Inventor: **WANG, Junwei
Beijing 100085 (CN)**

(74) Representative: **Studio Torta S.p.A.
Via Viotti, 9
10121 Torino (IT)**

(54) **CYCLIC PREFIX EXTENSION METHOD AND APPARATUS, TERMINAL AND NETWORK DEVICE**

(57) The present disclosure provides a cyclic prefix extension method and device, user equipment and network device, and relates to the technical field of communications. The method includes: receiving, by a user equipment (UE), relevant information of a cyclic prefix (CP) extension and/or information of frequency domain reserved resources of a first OFDM symbol, transmitted by a network device; wherein the relevant information of the CP extension is used to indicate a target OFDM symbol for the CP extension and a CP extension increment, and the first OFDM symbol is adjacent to the target OFDM symbol; performing, by the UE, data transmission according to the relevant information of the CP extension and/or the information of the frequency domain reserved resources of the first OFDM symbol.

FIG. 3

## Description

The present application is filed based on and claims the priority of Chinese Application No. 202310856062.1 filed on July 12, 2023, entitled "cyclic prefix extension method and device, user equipment and network device", the disclosure of which are incorporated in their entireties by reference herein.

## TECHNICAL FIELD

The present disclosure relates to the field of communication technology, and in particular to a cyclic prefix extension method and device, user equipment and network device.

## BACKGROUND

In future broadcast and multicast services, it is necessary to support higher-speed video streaming services, such as high-definition television and augmented reality (AR)/virtual reality (VR) images. The characteristics of these services are that they require higher data transmission rates.

The single frequency network (SFN) technology is an effective way to improve the transmission efficiency of the broadcast and multicast services, and is adopted in the multicast/broadcast service (MBS) of the long term evolution (LTE). However, the SFN technology needs the support of a long cyclic prefix (CP), but frame structure parameters of the relevant new radio (NR) do not support the frame structure with a long CP. The introduction of the long CP will require significant modifications to the physical layer, thereby increasing product manufacturing complexity.

## SUMMARY

An object of the present disclosure is to provide a cyclic prefix extension method and device, user equipment and network device, which can solve the problem that the introduction of long CP in SFN increases the complexity of the product.

One embodiment of the present disclosure provides a cyclic prefix extension method, including:

receiving, by a user equipment (UE), relevant information of a cyclic prefix (CP) extension and/or information of frequency domain reserved resources of a first OFDM symbol, transmitted by a network device; wherein the relevant information of the CP extension is used to indicate a target OFDM symbol for the CP extension and a CP extension increment, and the first OFDM symbol is adjacent to the target OFDM symbol;

performing, by the UE, data transmission according to the relevant information of the CP extension and/or the information of the frequency domain reserved resources of the first OFDM symbol.

In some embodiments, the relevant information of the CP extension includes at least one of the following:

information indicating the target OFDM symbol for the CP extension;
CP extension increment;
length of an extended CP.

In some embodiments, the receiving, by a user equipment (UE), relevant information of cyclic prefix (CP) extension and/or information of frequency domain reserved resources of a first OFDM symbol, transmitted by a network device, includes:

receiving a high layer signaling and/or a scheduling signaling transmitted by the network device, wherein the high layer signaling and/or the scheduling signaling carries the relevant information of the CP extension and/or the information of frequency domain reserved resources of the first OFDM symbol.

In some embodiments, the performing, by the UE, data transmission according to the relevant information of the CP extension and/or the information of the frequency domain reserved resources of the first OFDM symbol, includes:

determining that the frequency domain reserved resources are not used for downlink transmission or uplink transmission according to the information of the frequency domain reserved resources of the first OFDM symbol.

In some embodiments, the performing, by the UE, data transmission according to the relevant information of the CP extension, includes:

adjusting a starting position for receiving the target OFDM symbol according to the CP extension increment.

In some embodiments, the starting position for receiving the target OFDM symbol is a position obtained by shifting a reception starting position determined according to a normal CP backward by M time-domain positions; wherein M is the CP extension increment.

One embodiment of the present disclosure provides a cyclic prefix extension method, including:

transmitting, by a network device, relevant information of a cyclic prefix (CP) extension and/or information of frequency domain reserved resources of a first OFDM symbol, to a user equipment (UE);
wherein the relevant information of the CP extension is used to indicate a target OFDM symbol for the CP extension and a CP extension increment, and the first OFDM symbol is adjacent to the target OFDM symbol.

In some embodiments, the transmitting, by a network device, relevant information of a cyclic prefix (CP) extension and/or information of frequency domain reserved resources of a first OFDM symbol, to a user equipment (UE), includes:
transmitting a high-layer signaling and/or a scheduling signaling to the UE, wherein the high-layer signaling and/or the scheduling signaling carries the relevant information of the CP extension and/or the information of frequency domain reserved resources of the first OFDM symbol.

In some embodiments, the first OFDM symbol is an adjacent symbol following a time domain position of the target OFDM symbol, and values of M first time domain positions of the first OFDM symbol are the same as values of first M time domain positions of the target OFDM symbol;
or,

the first OFDM symbol is an adjacent symbol before a time domain position of the target OFDM symbol, and values of last M time domain positions of the first OFDM symbol are the same as values of M second time domain positions of the target OFDM symbol;
wherein M is the CP expansion increment.

In some embodiments, the M first time domain positions include one of the following:

first M time domain positions of the first OFDM symbol after adding CP according to a quantity of a normal CP;
when M is less than or equal to A, the M first time domain positions include: a time domain position of first data and subsequent M-1 time domain positions, and the first data is data whose sequence number is a difference between a total length of a data sequence and A;
when M is greater than A, first to A-th time domain positions in M include: a time domain position of first data and subsequent A-1 time domain positions, the first data is data whose sequence number is a difference between a total length of a data sequence and A; (A+1)-th to M-th time domain positions in M are: first (M-A) time domain positions;
wherein A is the number of sample points of a normal CP.

In some embodiments, the M second time domain positions include:
a difference between a total length of a data sequence and a total length of an extended CP, and time domain positions of subsequent M-1 data.

In some embodiments, values of the frequency domain reserved resources are determined in a way including:

selecting M1 frequency domain reserved resource positions from N frequency domain positions, wherein M1 is greater than or equal to 0;
according to M known data and transformation formula, determining one or more sets of numerical solutions, wherein each set of numerical solutions corresponds to a resource position combination;
if there is one set of numerical solutions, determining the set of numerical solutions as the values of the frequency domain reserved resources; if there are multiple sets of the numerical solutions, determining one sets of numerical solutions that meets a first condition in the multiple sets of numerical solutions as the values of the frequency domain reserved resources;
wherein M is the CP extension increment, and the M known data are values of M time domain positions, shared between the first OFDM symbol and the target OFDM symbol.

In some embodiments, the first condition includes at least one of the following:

moduli of all values in one set of numerical solutions are smaller than a first threshold;
an average value of moduli of all numerical values in one set of numerical solutions is less than a second threshold.

In some embodiments, distribution of the M1 frequency domain reserved resources includes at least one of the following situations:

the M1 frequency-domain reserved resources are distributed within a transmissible bandwidth;

the M1 frequency-domain reserved resources are distributed within a guard band, and a signal power of the M1 frequency-domain reserved resources is less than a third threshold;

the M1 frequency-domain reserved resources are distributed outside the bandwidth, and a signal power of the M1 resources is less than a fourth threshold.

In some embodiments, the relevant information of the CP extension is determined in a way including:

determining the CP extension increment; wherein the CP extension increment is an increment relative to a quantity of a normal CP;

determining the relevant information of the CP extension according to the CP extension increment.

In some embodiments, the frequency domain reserved resources of the first OFDM symbol are not used for downlink transmission or uplink transmission.

One embodiment of the present disclosure provides a user equipment (UE), including: a memory, a transceiver, and a processor;

wherein the memory is used to store a computer program; the transceiver is used to receive and send data under control of the processor; the processor is used to read the computer program in the memory and perform the following operations:

receiving relevant information of a cyclic prefix (CP) extension and/or information of frequency domain reserved resources of a first OFDM symbol, transmitted by a network device; wherein the relevant information of the CP extension is used to indicate a target OFDM symbol for the CP extension and a CP extension increment, and the first OFDM symbol is adjacent to the target OFDM symbol;

performing data transmission according to the relevant information of the CP extension and/or the information of the frequency domain reserved resources of the first OFDM symbol.

In some embodiments, the processor is used to read the computer program in the memory and perform the following operations:

determining that the frequency domain reserved resources are not used for downlink transmission or uplink transmission according to the information of the frequency domain reserved resources of the first OFDM symbol.

In some embodiments, the processor is used to read the computer program in the memory and perform the following operations:

adjusting a starting position for receiving the target OFDM symbol according to the CP extension increment.

In some embodiments, the starting position for receiving the target OFDM symbol is a position obtained by shifting a reception starting position determined according to a normal CP backward by M time-domain positions; wherein M is the CP extension increment.

One embodiment of the present disclosure provides a network device, including: a memory, a transceiver, and a processor;

wherein the memory is used to store a computer program; the transceiver is used to receive and send data under control of the processor; the processor is used to read the computer program in the memory and perform the following operations:

transmitting relevant information of a cyclic prefix (CP) extension and/or information of frequency domain reserved resources of a first OFDM symbol, to a user equipment (UE);

wherein the relevant information of the CP extension is used to indicate a target OFDM symbol for the CP extension and a CP extension increment, and the first OFDM symbol is adjacent to the target OFDM symbol.

In some embodiments, the first OFDM symbol is an adjacent symbol following a time domain position of the target OFDM symbol, and values of M first time domain positions of the first OFDM symbol are the same as values of first M time domain positions of the target OFDM symbol;

or,

the first OFDM symbol is an adjacent symbol before a time domain position of the target OFDM symbol, and values of last M time domain positions of the first OFDM symbol are the same as values of M second time domain positions of the target OFDM symbol;

wherein M is the CP expansion increment.

In some embodiments, the M first time domain positions include one of the following:

first M time domain positions of the first OFDM symbol after adding CP according to a quantity of a normal CP;
when M is less than or equal to A, the M first time domain positions include: a time domain position of first data and subsequent M-1 time domain positions, and the first data is data whose sequence number is a difference between a total length of a data sequence and A;
when M is greater than A, first to A-th time domain positions in M include: a time domain position of first data and subsequent A-1 time domain positions, the first data is data whose sequence number is a difference between a total length of a data sequence and A; (A+1)-th to M-th time domain positions in M are: first (M-A) time domain positions;
wherein A is the number of sample points of a normal CP.

In some embodiments, the M second time domain positions include:
a difference between a total length of a data sequence and a total length of an extended CP, and time domain positions of subsequent M-1 data.

In some embodiments, the processor is used to read the computer program in the memory and perform the following operations:

selecting M1 frequency domain reserved resource positions from N frequency domain positions, wherein M1 is greater than or equal to 0;
according to M known data and transformation formula, determining one or more sets of numerical solutions, wherein each set of numerical solutions corresponds to a resource position combination;
if there is one set of numerical solutions, determining the set of numerical solutions as the values of the frequency domain reserved resources; if there are multiple sets of the numerical solutions, determining one sets of numerical solutions that meets a first condition in the multiple sets of numerical solutions as the values of the frequency domain reserved resources;
wherein M is the CP extension increment, and the M known data are values of M time domain positions, shared between the first OFDM symbol and the target OFDM symbol.

In some embodiments, the processor is used to read the computer program in the memory and perform the following operations:

determining the CP extension increment; wherein the CP extension increment is an increment relative to a quantity of a normal CP;
determining the relevant information of the CP extension according to the CP extension increment.

One embodiment of the present disclosure provides a cyclic prefix extension device, applied to a UE and including:

a first receiving unit used to receive relevant information of a cyclic prefix (CP) extension and/or information of frequency domain reserved resources of a first OFDM symbol, transmitted by a network device; wherein the relevant information of the CP extension is used to indicate a target OFDM symbol for the CP extension and a CP extension increment, and the first OFDM symbol is adjacent to the target OFDM symbol;
a transmission unit used to perform data transmission according to the relevant information of the CP extension and/or the information of the frequency domain reserved resources of the first OFDM symbol.

One embodiment of the present disclosure provides a cyclic prefix extension device, applied to a network device and including:

a first transmission unit used to transmit relevant information of a cyclic prefix (CP) extension and/or information of frequency domain reserved resources of a first OFDM symbol, to a user equipment (UE);
wherein the relevant information of the CP extension is used to indicate a target OFDM symbol for the CP extension and a CP extension increment, and the first OFDM symbol is adjacent to the target OFDM symbol.

One embodiment of the present disclosure provides a processor-readable storage medium, including: a computer program stored thereon; wherein the computer program is used to cause a processor to execute steps of the above method.

The beneficial effects of the technical solution in the present disclosure areas follows.

In the embodiment of the present disclosure, the UE receives the relevant information of the CP extension transmitted by the network device, so as to determine the target OFDM symbol that requires CP extension and the CP extension increment; according to CP extension increment, the UE can adjust the starting position for receiving the target OFDM symbol. By adjusting the starting position for receiving the target OFDM symbol, the effect of CP extension can be achieved without changing the physical layer frame structure. The UE can determine unavailable positions in the data transmission based on the information of the frequency domain reserved resources of symbols adjacent to the target OFDM symbol transmitted by the network device, thereby improving data reception efficiency. The UE can also obtain a to-be-transmitted uplink OFDM symbol based on the information of the frequency domain reserved resources, thereby achieving the effect of CP extension without changing the physical layer frame structure. This solution achieves the effect of CP extension without changing the physical layer frame structure, resulting in lower device implementation costs, compatibility with legacy UE services, and conservation of air interface resources.

## BRIEF DESCRIPTION OF THE DRAWINGS

FIG. 1 is a schematic diagram showing a basic orthogonal frequency division multiplexing (OFDM) process;
FIG. 2 is a schematic diagram showing a cell-level SFN technology;
FIG. 3 is a first schematic flowchart of a cyclic prefix extension method according to an embodiment of the present disclosure;
FIG. 4 s a first schematic diagram of CP extension according to the embodiment of the present disclosure;
FIG. 5 is a first schematic diagram of a multipath delay difference according to an embodiment of the present disclosure;
FIG. 6 is a second schematic diagram of a multipath delay difference according to an embodiment of the present disclosure;
FIG. 7 is a second schematic diagram of CP extension according to the embodiment of the present disclosure;
FIG. 8 is a third schematic diagram of CP extension according to the embodiment of the present disclosure;
FIG. 9 is a third schematic diagram of a multipath delay difference according to an embodiment of the present disclosure;
FIG. 10 is a fourth schematic diagram of a multipath delay difference according to an embodiment of the present disclosure;
FIG. 11 is a fourth schematic diagram of CP extension according to the embodiment of the present disclosure;
FIG. 12 is a fifth schematic diagram of CP extension according to the embodiment of the present disclosure;
FIG. 13 is a schematic diagram showing numerical relationship between adjacent symbols according to an embodiment of the present disclosure;
FIG. 14 is a schematic diagram showing a guard bandwidth/out-of-band frequency according to an embodiment of the present disclosure;
FIG. 15 is a first schematic diagram showing effects of performing CP extension according to an embodiment of the present disclosure;
FIG. 16 is a sixth schematic diagram of CP extension according to the embodiment of the present disclosure;
FIG. 17 is a seventh schematic diagram of CP extension according to the embodiment of the present disclosure;
FIG. 18 is an eighth schematic diagram of CP extension according to the embodiment of the present disclosure;
FIG. 19 is a ninth schematic diagram of CP extension according to the embodiment of the present disclosure;
FIG. 20 is a tenth schematic diagram of CP extension according to the embodiment of the present disclosure;
FIG. 21 is a second schematic diagram showing effects of performing CP extension according to an embodiment of the present disclosure;
FIG. 22 is a second schematic flowchart of a cyclic prefix extension method according to an embodiment of the present disclosure;
FIG. 23 is a first schematic diagram of a cyclic prefix extension device according to an embodiment of the present disclosure;
FIG. 24 is a second schematic diagram of a cyclic prefix extension device according to an embodiment of the present disclosure;
FIG. 25 is a schematic diagram of a user equipment according to an embodiment of the present disclosure; and
FIG. 26 is a schematic diagram of a network device according to an embodiment of the present disclosure.

## DETAILED DESCRIPTION

In order to make technical problems to be solved, technical solutions and advantages of the present disclosure clearer, the following will be described in detail in conjunction with the accompanying drawings and specific embodiments.

In the following description, specific details such as configurations and components are provided solely for the purpose of facilitating a complete understanding of the embodiments of the present disclosure. Accordingly, those skilled in the art will recognize that various changes and modifications can be made to the embodiments described herein without departing from the scope and spirit of the present disclosure. Descriptions of well-known functions and constructions are omitted for clarity and conciseness.

It is to be understood that "in one embodiment" or "in an embodiment" throughout the specification mean that a particular feature, structure, or characteristic described in connection with the embodiment is included in at least one embodiment of the present disclosure. Thus, the appearances of "in one embodiment" or "in an embodiment" in various places throughout the specification are not necessarily all referring to the same embodiment. Further, the specific features, structures, or characteristics may be combined in any suitable manner in one or more embodiments.

In various embodiments of the present disclosure, it is to be understood that the numerical order of the following processes does not imply a sequence of execution. The order of execution should be determined by their inherent functionality and logic, and shall not be construed as limiting the implementation process of the embodiments herein.

The term "and/or" in the embodiments of the present application describes an association relationship of associated objects, which indicates that there may be three types of relationships. For example, A and/or B may represent three situations: only A being included, both A and B being included, only B being included. The character "/" generally indicates that there is an "or" relationship between associated objects in front of it and behind it.

The term "multiple" in the embodiments of the present application refers to two or more than two, and other words for expressing quantities are similar to it.

The technical solutions in the embodiments of the present disclosure will be clearly and completely described below with reference to the accompanying drawings in the embodiments of the present disclosure. Obviously, the described embodiments are only some embodiments of the present disclosure, rather than all embodiments. Based on the embodiments in the present disclosure, all other embodiments obtained by those of ordinary skill in the art without creative efforts fall within the scope of protection of the present disclosure.

An introduction to the related technologies associated with the present disclosure is provided below.

1. Orthogonal frequency division multiplex (OFDM) processing

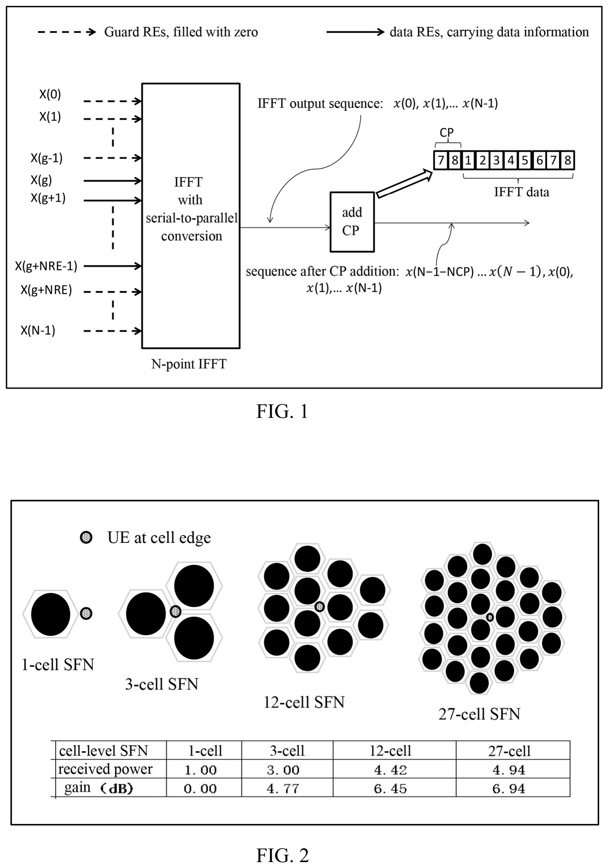

One basic process at an OFDM transmitter is shown in FIG. 1, where an inverse fast Fourier transform (IFFT) is performed on N points, and a parallel/serial conversion is performed on output of the IFFT, and then a CP addition process is performed.

The IFFT transformation can be expressed by the following formula:

$$x(n) = \frac{1}{N} \sum_{k=0}^{k=N-1} X(k) W_N^{-kn}, n = 0,1, \ldots N-1$$

Where an input X sequence of IFFT is frequency domain data, and an output x sequence of IFFT is time domain data.

X(0) to X(g-1) represent guard bands in the frequency domain, and the transmitter usually sets values on these resource elements (REs) to zero, and g represents the number of guard band resource elements (REs).

X(g) to X(NRE+g-1) represent frequency domain data information, which are RE units that can carry data in the OFDM system. NRE is a length set by the system.

X(NRE+g) to X(N-1) represent guard bands in the frequency domain, and the transmitter usually sets values on these REs to zero, and g represents the number of guard band REs.

2. NR frame structure

Frame structure: a radio frame is 10ms long and includes 10 sub-frames. Each sub-frame is 1ms long. Each sub-frame includes several slots (different SCSs include different number of slots), and each slot includes 14 symbols, as shown in Table 1.

Table 1: frame structure parameters

| $\mu$ | $N_{symb}^{slot}$ | $N_{slot}^{frame,\mu}$ | $N_{slot}^{sub-frame,\mu}$ |
|---|---|---|---|
| 0 | 14 | 10 | 1 |

(continued)

| μ | $N_{svmb}^{slot}$ | $N_{slot}^{frame,\mu}$ | $N_{slot}^{sub-frame,\mu}$ |
|---|---|---|---|
| 1 | 14 | 20 | 2 |
| 2 | 14 | 40 | 4 |
| 3 | 14 | 80 | 8 |
| 4 | 14 | 160 | 16 |

Table 1 shows the number of slots included in a 10ms radio frame and the number of slots included in each sub-frame under different SCS conditions. For example, when μ=4, each sub-frame includes 16 slots, each slot includes 14 symbols, that is, each sub-frame includes 16*14=224 symbols.

Symbol length and CP: in case that the subcarrier spacing (SCS) remains unchanged, the symbol length and CP length are as follows:

the symbol length: $N_u^\mu = 2048\kappa \cdot 2^{-\mu}$ ;

$$N_{CP,l}^\mu = \begin{cases} 512\kappa \cdot 2^{-\mu} & \text{extended } CP \\ 144\kappa \cdot 2^{-\mu} + 16\kappa & \text{normal } CP, \; l = 0 \text{ or } l = 7 \cdot 2^\mu \\ 144\kappa \cdot 2^{-\mu} & \text{normal } CP, \; l = 0 \text{ or } l = 7 \cdot 2^\mu \end{cases} \quad ;$$

Where μ is the subcarrier width configuration and *l* is the number of symbols.

3. Cell-level SFN technology

SFN technology is that adjacent cells/base stations send the same signal. When the same signals sent by different cells reach a user equipment (UE) at a cell edge, a received signal power at the UE is superposition of the signals of each cell. In traditional non-SFN technology, signals from other cells are interference, which makes the SFN technology have a strong advantage in transmission of broadcast signals and greatly improves reception performance of UEs at the cell edge. FIG. 2 is a schematic diagram of cell-level SFN technology.

FIG. 2 illustrates technical gains of the cell-level SFN technology. When the number of cells in the SFN is 1, it is equivalent to not using the SFN technology. It is assumed that the signal power received by a UE at a cell edge is 1, when the number of cells in the SFN is 3, the received signal power becomes 3; when 12 cells participate in the SFN, the received signal power becomes 4.42; when 27 cells participate in the SFN, the received signal power becomes 4.94. The SFN technology can enhance the signal power for UEs at the cell edge and improve spectrum utilization at the cell edge, thereby increasing user satisfaction.

Embodiments of the present disclosure provide a cyclic prefix extension method and device, user equipment and network device, which can solve the problem that the introduction of long CP in SFN increases the complexity of the product.

The method and the device are based on the same application concept. Since the principles of solving the problem by the method and the device are similar, the implementation of the method and the device can refer to each other, and the repeated parts will not be repeated.

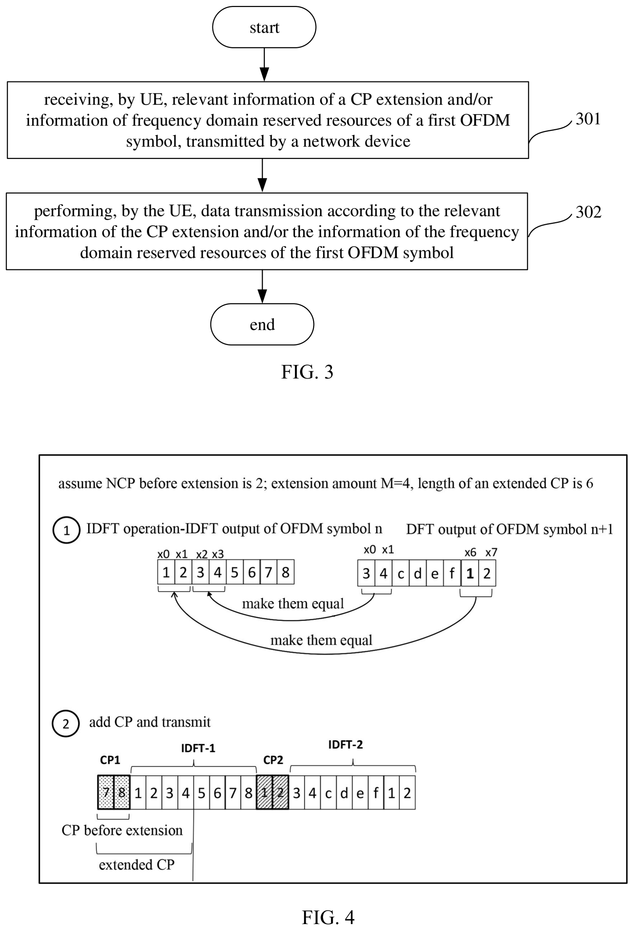

As shown in FIG. 3, one embodiment of the present disclosure provides a cyclic prefix extension method, which is applied to a user equipment (UE) and specifically includes the following steps.

Step 301: receiving, by the UE, relevant information of a CP extension and/or information of frequency domain reserved resources of a first OFDM symbol, transmitted by a network device.

The relevant information of the CP extension is used to indicate a target OFDM symbol using the extended CP and a CP extension increment; the first OFDM symbol is adjacent to the target OFDM symbol.

Step 302: performing, by the UE, data transmission according to the relevant information of the CP extension and/or the information of the frequency domain reserved resources of the first OFDM symbol.

In this embodiment, the network device may transmit the relevant information of the CP extension to the UE, indicating the target OFDM symbol that requires CP extension and the CP extension increment. There may be one or more target OFDM symbols, and the CP extension increment refers to an increment relative to a CP length before extension. The UE adjusts a starting position for receiving the target OFDM symbol according to the relevant information of the CP extension, thereby achieving the purpose of extending the CP for the target OFDM symbol.

In some embodiments, the network device may also transmit, to the UE, information of frequency domain reserved resources of a symbol (i.e., the first OFDM symbol) adjacent to the target OFDM symbol that requires CP extension. The frequency domain reserved resources are reserved resources before the first OFDM symbol undergoes a transform, and the transform may refer to an inverse discrete Fourier transform (IDFT or IFFT). The information of the frequency domain reserved resources may include: a position of the frequency domain reserved resources and a value of the position. The network device can achieve the effect of CP extension of the target OFDM symbol by setting the value of the frequency domain reserved resources.

In one embodiment of the present disclosure, the UE receives the relevant information of the CP extension transmitted by the network device, so as to determine the target OFDM symbol that requires CP extension and the CP extension increment; according to CP extension increment, the UE can adjust the starting position for receiving the target OFDM symbol. By adjusting the starting position for receiving the target OFDM symbol, the effect of CP extension can be achieved without changing the physical layer frame structure. The UE can determine unavailable positions in the data transmission based on the information of the frequency domain reserved resources of symbols adjacent to the target OFDM symbol transmitted by the network device, thereby improving data reception efficiency. The UE can also obtain a to-be-transmitted uplink OFDM symbol based on the information of the frequency domain reserved resources, thereby achieving the effect of CP extension without changing the physical layer frame structure. This solution achieves the effect of CP extension without changing the physical layer frame structure, resulting in lower device implementation costs, compatibility with legacy UE services, and conservation of air interface resources.

It is to be noted that a downlink data symbol transmission process is described in this technical solution, that is, the UE is a receiving end of the data symbol, and the network device is a transmission end of the data symbol. The relevant technology can also be applied to an uplink data transmission process; at this point, the UE is a transmission end, and the network device is a receiving end, and information configuration and indication are performed by the network device. That is, for transmission of uplink data, it is still the network device that transmits, to the UE, the relevant information of the CP extension, and/or the information of the frequency domain reserved resources of the first OFDM symbol. The UE performs a data transmission process based on the received information, and the data transmission process may include: data mapping, transform, adding CP, transmitting symbols and other processes. The network device receives uplink data transmitted by the UE.

In some embodiments, the performing, by the UE, data transmission according to the relevant information of the CP extension and/or the information of the frequency domain reserved resources of the first OFDM symbol, may include: performing uplink data transmission or downlink data transmission according to the relevant information of the CP extension and/or the information of the frequency domain reserved resources of the first OFDM symbol.

The performing uplink data transmission according to the relevant information of the CP extension and/or the information of the frequency domain reserved resources of the first OFDM symbol, may include: generating a to-be-transmitted OFDM symbol according to the relevant information of the CP extension and/or the information of the frequency domain reserved resources of the first OFDM symbol; and transmitting the OFDM symbol to the network device. The OFDM symbol generated in this way can achieve the effect of equivalently extending the CP without changing the frame structure.

The performing downlink data transmission according to the relevant information of the CP extension and/or the information of the frequency domain reserved resources of the first OFDM symbol, may include: adjusting a starting position for receiving the target OFDM symbol according to the relevant information of the CP extension. In this way, by adjusting the starting position for receiving the target OFDM symbol, the effect of equivalently extending the CP can be achieved without changing the frame structure.

In some embodiments, the relevant information of the CP extension includes at least one of the following:

    1) information indicating the target OFDM symbol using the extended CP; this information may indicate which one or more symbols that require CP extension.
    2) CP extension increment: the CP extension increment refers to an increment relative to a CP length before extension, and its unit can be microseconds (or milliseconds), or sampling points or a time unit of IFFT sample points. In some embodiments, the network device may determine the CP extension increment according to service transmission quality requirement and spacing information of deployed network devices.
    3) Length of the extended CP: the network device may also directly indicate the length of the extended CP, and a CP extension amount may be obtained by calculation.

In this embodiment, the UE receives configuration or indication information of the network device, and then determines a CP time domain extension increment. The network device can directly indicate a value of the extension increment, or can indicate a length of an extended CP. If the length of the extended CP is indicated, the UE can determine an extension increment according to a CP length of a current symbol and the CP length after extension.

It is assumed that the CP extension increment is represented by M, and the unit of M is the same as the time unit of IFFT sample points. For example, assuming that the number of IFFT sample points is 2048, the value of M is as follows:

a CP length before extension is 144, and a CP length after extension is 512, then M is equal to 512-144=368;
a CP length before extension is 160, and a CP length after extension is 512, then M is equal to 512-160=352.

As an optional embodiment, the receiving, by the UE, relevant information of a CP extension and/or information of frequency domain reserved resources of a first OFDM symbol, transmitted by a network device, includes:
receiving a high layer signaling and/or a scheduling signaling transmitted by a network device, where the high layer signaling and/or the scheduling signaling carries the relevant information of the CP extension and/or the information of frequency domain reserved resources of the first OFDM symbol.

In this embodiment, the network device transmits the relevant information of the CP extension and/or the frequency domain reserved resource information of the first OFDM symbol to the UE through high layer signaling and/or scheduling signaling. The scheduling signaling may be dynamic scheduling signaling. For example, the CP extension amount may be indicated by high layer information or by dynamic scheduling signaling, and an indicated value may be an extension increment M or the length of the extended CP.

For example, the network device configures one or more OFDM symbols of extended CP through high layer signaling, and the OFDM symbols that requires CP extension may be: all downlink symbols (slots) or a part of downlink symbols (slots) on a serving cell. Alternatively, the network device indicates one or more OFDM symbols that require CP extension, through scheduling signaling, and the OFDM symbols that require CP extension may be: all symbols or part of scheduled symbols.

When the network device transmits the information of the frequency domain reserved resources of the first OFDM symbol to the UE, the network device may indicate information of M1 frequency domain reserved resources of the first OFDM symbol in the OFDM symbols to the UE. The network device transmits the OFDM symbol to the UE after processes such as CP addition.

For the target OFDM symbol with the extended CP, the UE can determine timing information of the target OFDM symbol according to the CP extension increment, that is, a starting position for receiving data window for performing discrete Fourier transform (DFT). Specifically, it is assumed that a synchronization moment determined by a UE according to asynchronization signal is t0, a synchronization moment of receiving the target OFDM symbol is delayed by M time units, that is, t0+t(M); here t(M) refers to converting numerical value of the M value into the same time dimension as t0.

In some embodiments, the performing data transmission according to the information of the frequency domain reserved resources of the first OFDM symbol, includes: according to the information of the frequency domain reserved resources of the first OFDM symbol, determining that the reserved resources are not used for downlink transmission or uplink transmission.

In this embodiment, the downlink transmission includes but is not limited to: transmission of physical downlink shared channel (PDSCH), physical downlink control channel (PDCCH), channel state information reference signal (CSI-RS) or demodulation reference signal (DMRS).

It is to be noted that for uplink data transmission, the frequency domain reserved resources before the first OFDM symbol is transformed are not used for uplink transmission.

The UE receives the information of the frequency domain reserved resources of the first OFDM symbol transmitted by the network device, and the information can be used to determine location and value of M1 frequency domain reserved resources. The information can be high layer signaling configuration or dynamic scheduling signaling transmitted by the network device. For example, the network device configures the information of M1 frequency domain reserved resources through high layer signaling, and the information can be applied to all downlink symbols (slots) or part of the downlink symbols (slots) on a carrier; or, the network device indicates one or more pieces of "information of M1 frequency domain reserved resources" through scheduling signaling, which can be all symbols or part of the symbols of the scheduled symbols.

The information of M1 frequency domain reserved resources is applied to the first OFDM symbol, that is, an adjacent symbol of the target OFDM symbol with the extended CP. On the UE side, these resources are considered as unavailable resources, that is, the network device is considered not to transmit data on these resources.

It is to be noted that each target OFDM symbol with the extended CP corresponds to one first OFDM symbol to which the information of M1 frequency domain reserved resources is applied. When there are multiple target OFDM symbols with the extended CP, they correspond to multiple first OFDM symbols to which the information of M1 frequency domain reserved resources is applied.

For the to-be-transmitted data, if it is determined that CP extension is required for the target OFDM symbol, before performing the IFFT transformation, the network device first determines positions of the M1 frequency-domain reserved resources in the first OFDM symbol and values of the reserved resources at the positions. If the first OFDM symbol is an adjacent symbol following the target OFDM symbol, by configuring "appropriate" positions and "appropriate" values for the M1 frequency-domain reserved resources, after IFFT transform, time domain values of M specific positions in the first OFDM symbol are equal to the first M time domain values of the target OFDM symbol.

It is assumed that a symbol n is an OFDM symbol that requires CP extension, i.e., the target OFDM symbol, and symbol n+1 is the first OFDM symbol. For the symbol n+1, if after IFFT transform1, values of M specific time domain positions in the OFDM symbol n+1 are equal to the first M time domain values of the OFDM symbol n, which is equivalent to performing CP extension on the symbol n+1.

It is to be noted that the "equal" described in the present disclosure is equivalent in an engineering sense; when a difference between two values is less than an error range, they can be considered equal, and the specific error range is implemented by a data transmission end (for example, the error range is 3% or 5%).

For the M specific time domain positions in the above symbol n+1, there are two description modes:

description mode 1: the first M time-domain positions of the symbol n+1 after adding CP according to the quantity of the normal CP, where the quantity of the normal CP is the CP number (or length) before CP extension.

For example, for the OFDM symbol n, the first M sequence values in a sequence formed after IFFT transformation are Y0.

For the OFDM symbol n+1, the first M sequence values in a sequence formed after IFFT transformation and CP addition are Y1.

The above Y0 is equal to Y1.

Description mode 2: description based on relationship between M and the quantity of CP sample points A before expansion.

When M is less than or equal to A, the M first time domain positions include: a time domain position of first data and subsequent M-1 time domain positions, and the first data is data whose sequence number is a difference between a total length of the data sequence and A;

when M is greater than A, the first to A-th time domain positions in M include: a time domain position of first data and subsequent A-1 time domain positions, the first data is data whose sequence number is a difference between a total length of the data sequence and A; the (A+1)-th to M-th time domain positions in M are: first (M-A) time domain positions;

where A is the number of sample points of normal CP, which may be the length or number of the normal CP.

For example, for the OFDM symbol n, assuming a frequency domain data length is N, after IDFT transformation, an OFDM data sequence $x_0, x_1, ... x_{N-2}, x_{N-1}$ is formed. The first M time domain values are: $v_0, v_1, v_2, ... v_{M-1}$.

For the OFDM symbol n+1, assuming a frequency domain data length is $N_u^\mu = N$, after IDFT transformation, a data OFDM data sequence $x_0, x_1, ... x_{N-2}, x_{N-1}$ is formed.

When $M \leq N_{CP}^\mu$, the following values need to meet the conditions:

$$x_{N-N_{CP}^\mu} = v0, \quad x_{N-N_{CP}^\mu+1} = v1, \quad x_{N-N_{CP}^\mu+2} = v2, \quad ...x_{N-N_{CP}^\mu+M-1} = v_{M-1}.$$

When $M > N_{CP}^\mu$:

from m = 0 to $m = N_{CP}^\mu - 1$ m is any value between 0 and M, the following values need to satisfy the conditions:

$$x_{N-N_{CP}^\mu} = v0, \quad x_{N-N_{CP}^\mu+1} = v1, \quad x_{N-N_{CP}^\mu+2} = v2, \quad ...x_{N-1} = v_{N_{CP}^\mu-1};$$

from $m = N_{CP}^\mu$ to M - 1, the following values need to satisfy the conditions:

$$x_0 = v_{N_{CP}^\mu}, \quad x_1 = v_{N_{CP}^\mu+1}, \quad x_2 = v_{N_{CP}^\mu+2}, \quad ...x_{M-N_{CP}^\mu} = v_{M-1}.$$

$N_{CP}^\mu$ represents the number of IFFT samples before CP expansion.

The relationship between IFFT time-domain output samples of the OFDM symbol n+1 and the OFDM symbol n is shown in FIG. 4. Specifically, after transformation, M time-domain values of the symbol n+1 are equal to the first M time-domain values of the symbol n.

In some embodiments, a method for the network device to determine positions and values of the M1 frequency domain reserved resources of the first OFDM symbol may be as follows.

It is assumed that input frequency domain data is $X(n)$, n = 0,1, ... N - 1; where there are M1 frequency domain data $\{X(k_0), X(k_1), ... X(k_{M1-1})\}$ that do not transmit any information, that is, any value can be set. By setting M1 appropriate frequency domain values, the symbol n+1 after IFFT transformation meets the same requirement as the above M data sequences.

Here $k_0, k_1,...k_{M1-1}$ are integers greater than or equal to 0 and less than or equal to N-1 and are not repeated. The number of combinations of $k_0, k_1 .... k_{M1-1}$ is: $K = C_{M1-1}^{N} = \dfrac{N!}{M1!*(N-M1)!}$ , that is, combinations of selecting M1 elements from N elements.

The other frequency domains except for the M1 frequency domain reserved resources are used to transmit data (i.e., the other frequency domain data are fixed values and cannot be changed).

The above M1 frequency domain positions can be in a communication bandwidth content for data scheduling in a channel bandwidth, or can be placed in bandwidth, or placed out of band; but for the guard bandwidth and out-of-band RE, data value amplitude is constrained by relevant indicators.

For values of the M1 frequency domain positions, it is assumed that the frequency domain data $\{X(k_0),X(k_1),...X(k_{M-1})\}$ are unknown numbers to be found. Since the values of the M first time domain positions in the symbol n+1 are known to be equal to the values of the first M time domain positions of the symbol n, there are M known data in the time domain sequence $x_0, x_1, ... x_{N-2}, x_{N-1}$ according to the following IDFT formula:

$$x(n) = \frac{1}{N}\sum_{k=0}^{k=N-1} X(k)W_N^{-k*n}, \quad n = 0,1, ... N - 1.$$

When M1 is greater than or equal to M, M linear equations with M1 variables can be listed. That is, by solving the M linear equations with M1 variables, at least one set of "numerical solutions" can be obtained.

Further, since the number of combinations of $k_0,k_1,...k_{M1-1}$ is K $\left(K = C_{M1-1}^{N} = \dfrac{N!}{M1!*(N-M1)!}\right)$, that is, at least K sets of "numerical solutions" can be obtained.

One set of "appropriate" values is found from the K sets of "numerical solutions", that is, determining the "appropriate" positions and "appropriate" values of the M1 reserved resources.

A solution that satisfies an "appropriate" value can be defined as one that satisfies at least one of the following conditions:

modulus of all M1 values is less than a threshold;
an average value of moduli of M1 values is less than a threshold.

It is to be noted that, for REs on guard bandwidth or out-of-band resources, the above threshold values comply with standard restrictions, that is, the values may be smaller.

As an optional embodiment, the performing data transmission according to relevant information of the CP extension, includes: adjusting a starting position for receiving the target OFDM symbol according to the CP extension increment.

In some embodiments, the starting position for receiving the target OFDM symbol is: a position obtained by shifting a reception starting position determined according to a normal CP backward by M time-domain positions, where M is the CP extension increment.

In this embodiment, in case of determining the CP extension increment of the target OFDM symbol, the UE adjusts the starting position for receiving the target OFDM symbol to be delayed by M time-domain positions relative to an original reception position. The original reception position is a reception starting position determined according to the quantity of CPs before the extension.

It is to be noted that the above embodiment is described with the UE as the data receiving end and the network device as the data transmission end. In practical applications, the above CP extension method is also applicable to uplink data transmission, that is, the UE is used as a data transmission end and the network device is used as a data receiving end. The uplink data transmission process is similar to the downlink data transmission process in the above embodiment, and the relevant information of the CP extension and/or the information of the frequency domain reserved resources of the first OFDM symbol are all configured by the network device, only execution ends of the data transmission are varied.

Since the relevant information of the CP extension and/or the information of the frequency domain reserved resources of the first OFDM symbol are configured by the network device, for uplink data transmission, the UE can perform data transmission based on the information configured by the network device, such as: mapping to-be-transmitted data to frequency domain of a to-be-transmitted OFDM symbol; determining positions of the frequency domain reserved resources and values of the frequency domain reserved resources for the first OFDM symbol according to the information configured by the network device; performing transformation (such as IFFT or IDFT transformation) to generate a to-be-transmitted OFDM symbol; adding CP to the symbol according to the quantity of normal CP; transmitting the OFDM symbol to the network device. When receiving uplink data, the network device can adjust a starting position for receiving the target OFDM symbol based on the CP extension increment. The starting position for receiving the target OFDM symbol is a position obtained by shifting a reception starting position determined according to a normal CP backward by M time-domain positions. Other similar processes are not repeated here.

The following takes the downlink data as an example to illustrate the method for implementing CP extension by the network device and the UE when the first OFDM symbol is an adjacent symbol after the target OFDM symbol.

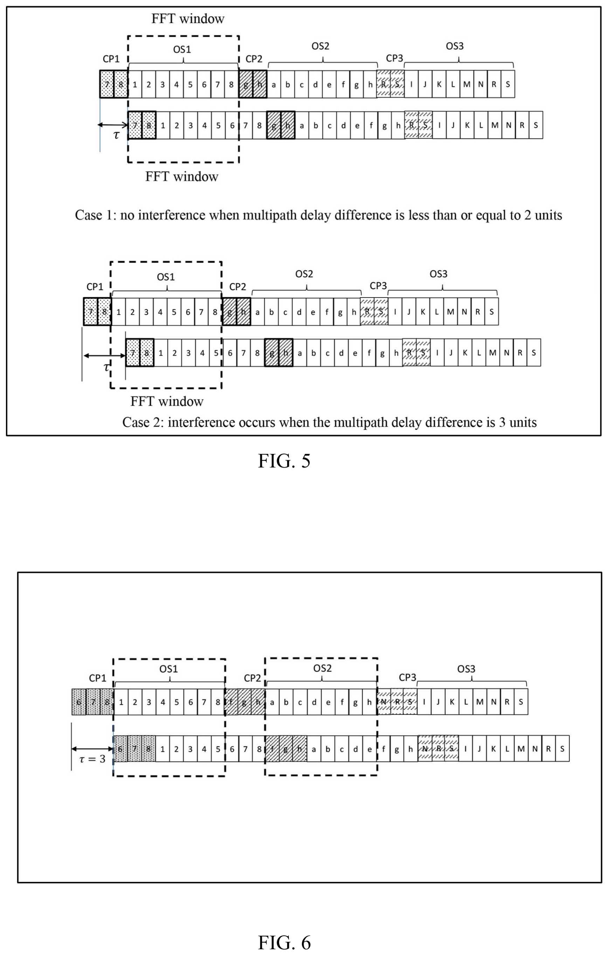

As an example, it is assumed that an OFDM symbol includes: a CP of 2 units in lengths, and data of 8 units (i.e., the number of IFFT points). As shown in FIG. 5, when the multipath delay difference $\tau$ is less than or equal to 2 unit in lengths, there is no mutual interference between the multipaths; when the multipath delay difference $\tau$ is equal to 3 unit in lengths, there is interference between the multipaths. Correspondingly, if the CP length is 3 time units, there is no inter-symbol interference, as shown in FIG. 6.

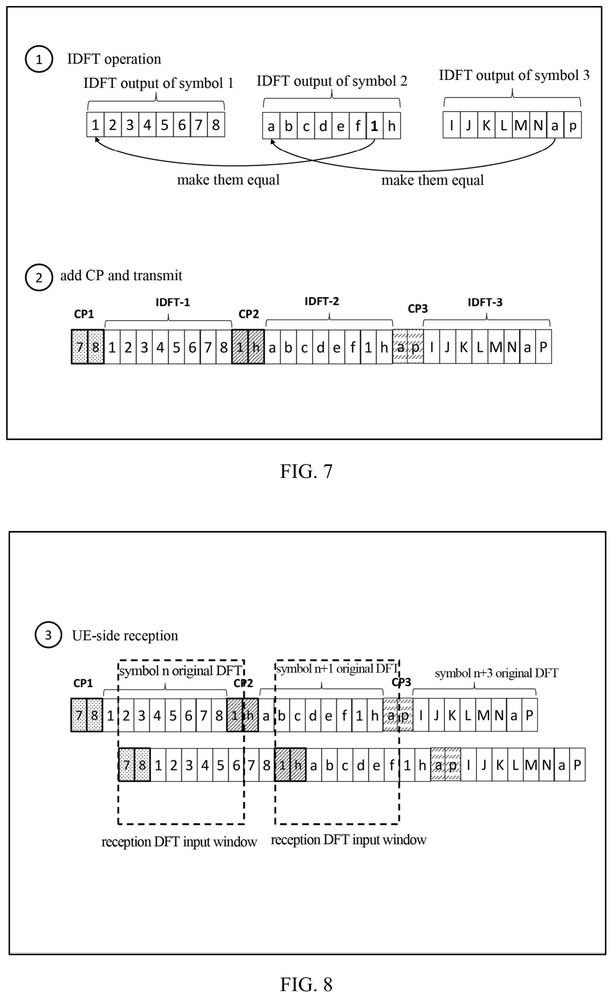

When the technical solution of the present disclosure is used to perform CP expansion on a symbol 1 and a symbol 2, the expansion increment M=1, then as shown in FIG. 7:

1) assuming that IDFT output of the symbol 1 is {1, 2, 3, 4, 5, 6, 7, 8}, that is, the first value x(0)=1;

2) an "appropriate value" is set at a specific frequency domain position of the symbol 2, so that the IDFT output of the symbol 2 is {a, b, c, d, e, f, 1, h}; that is, x(6)=1 (equal to x(0) of the symbol 1); meanwhile, in the symbol 2, x(0)=a;

3) an "appropriate value" is set at a specific frequency domain position of the symbol 3, so that the IDFT output of the symbol 3 is {I, J, K, L, M, N, a, P}, that is, x(6)=a (equal to x(0) of the symbol 2).

The transmitting end (here, the network device) adds CP according to the frame structure parameter of CP=2 to form OFDM transmission data.

At the receiving end (here, the UE), the starting position of a DFT input window is set according to CP=3, and DFT operation (time domain to frequency domain) is performed. As shown in FIG. 8, when the multipath difference is 3 units:

for the symbol n: each multipath data in the DFT window include: {1,2,3,4,5,6,7,8}; that is, the multipath information is a periodic signal, and there is no inter-symbol interference in the multipath;

for the symbol n+1: each multipath data in the DFT window includes: {1,h,a,b,c,d,e,f}; that is, the multipath information is a periodic signal, and there is no inter-symbol interference in the multipath.

As shown in FIG. 8, the UE's DFT input window is delayed backward by M=1 CP sample points relative to synchronization timing (i.e., the original DFT window starting position of the symbol) obtained according to the synchronization signal.

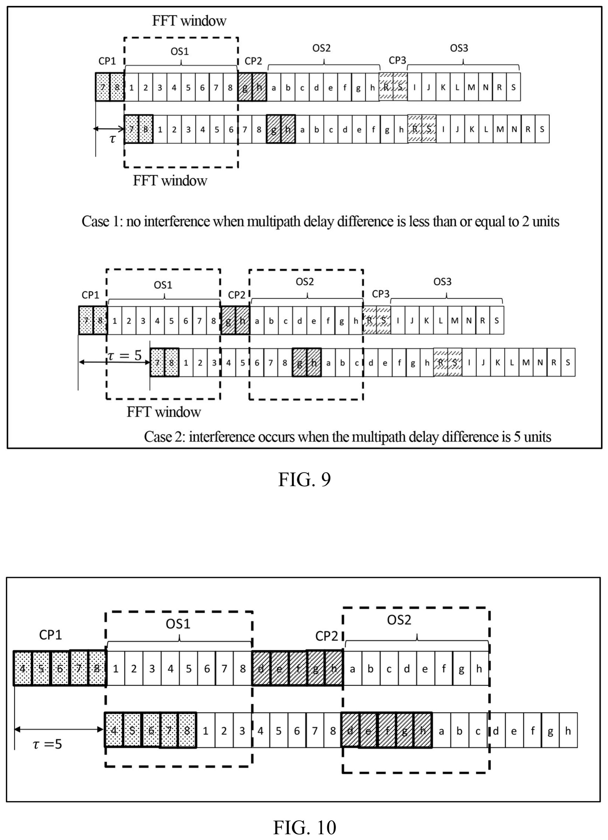

As another example, it is assumed that an OFDM symbol includes: a CP of 2 unit lengths; data of 8 units (i.e., the number of IFFT points). When the multipath delay difference $\tau$ is less than or equal to 2 units in lengths, there is no mutual interference between the multipaths; when the multipath delay difference $\tau$ is equal to 5 units in lengths, there is interference between the multipaths, as shown in FIG. 9. Correspondingly, if the length of the CP is 5 units in lengths, there is no inter-symbol interference, as shown in FIG. 10.

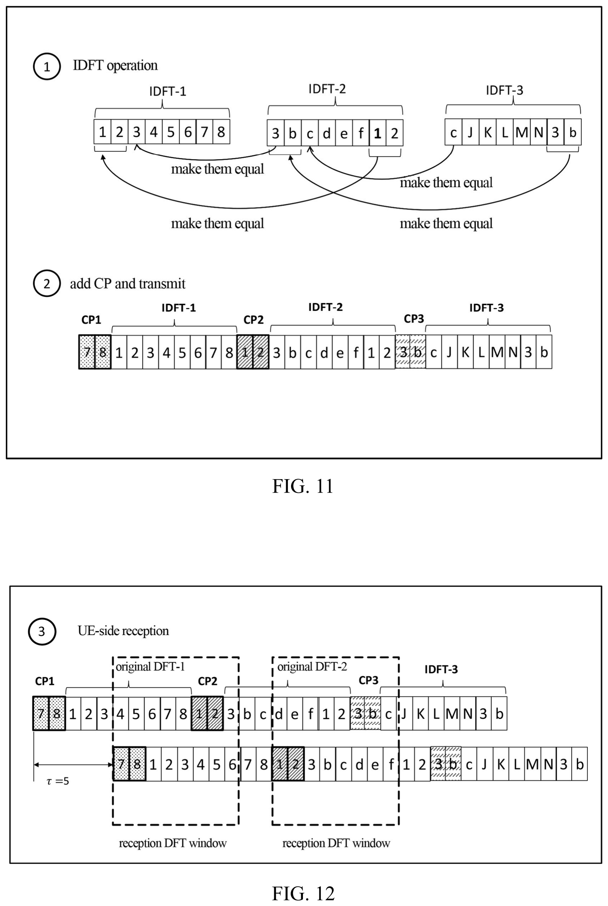

The following describes how to use this technical solution to perform CP extension on the symbol 1 and the symbol 2, with the extension amount M=3, as shown in FIG. 11.

It is assumed that IDFT output of the symbol 1 is {1, 2, 3, 4, 5, 6, 7, 8}. That is, the first M=3 values x(0)=1, x(1)=2, x(2)=3.

At M1 (e.g., M1=3) specific frequency domain positions of the symbol 2, M1 "appropriate values" are set as values of the reserved resources, so that the IDFT output of the symbol 2 is {3, b, c, d, f, g, h, 1, 2}. That is, x(6)=1, x(7)=2, x(0)=3 (equal to x(0), x(1), x(2) of symbol 1). At the same time, x(0)=a, x(1)=b, x(2)=c of symbol 2.

At M1 (e.g., M1=4, which can be equal to or different from M1 of the symbol 2) specific frequency domain positions of the symbol 3, M1 "appropriate values" are set so that the IDFT output of the symbol 3 is {c, j, k, l, m, n, 3, b}. That is, x(6)=3, x(7)=b, x(0)=c (equal to x(0), x(1), x(2) of the symbol 2).

The transmitting end (here, the network device) adds CP according to the frame structure parameter of CP=2 to form OFDM transmission data.

At the receiving end (here, the UE), a starting position of DFT input window is set according to CP=5, and the DFT operation (time domain to frequency domain) is performed. As shown in FIG. 12, when the multipath difference is 5 units:

For the symbol 1 (DFT-1): the multipath data in the DFT window each includes: {1, 2, 3, 4, 5, 6, 7, 8}. That is, the multipath information is a periodic signal, and there is no inter-symbol interference in the multipath;

for the symbol 2 (DFT-2): the multipath data in the DFT window each includes: {1, 2, 3, b, c, d, e, f}. That is, the multipath information is a periodic signal, and there is no inter-symbol interference in the multipath.

As shown in FIG. 12, the DFT input window of the UE is delayed by M=3 CP sample points relative to the synchronization time (the starting window position of the original DFT of the symbol) obtained according to the synchronization signal.

This method does not cause modification of the physical layer structure, can reduce the complexity of protocol formulation, does not increase the implementation cost of the device, and is compatible with legacy versions of UE.

In this embodiment, the effect of CP extension is achieved without altering the frame structure (i.e., there is no need to modify 1 slot containing 14 symbols to 1 slot containing 12 symbols). Meanwhile, the network device can flexibly set the CP increment M according to actual service requirements to accommodate the distance between different cells in the SFN area. Meanwhile, it is compatible with the legacy UE to receive broadcast and multicast services, thereby saving air interface resources.

In one embodiment of the present disclosure, the first OFDM symbol can an adjacent symbol following the target OFDM symbol with the extended CP or an adjacent symbol before the target OFDM symbol with the extended CP. The following first takes the case where the first OFDM symbol is an adjacent symbol following the target OFDM symbol with the extended CP as an example to illustrate the CP extension method of the present disclosure.

As an optional embodiment, it is assumed that the network device only indicates to the UE the target OFDM symbol that requires CP extension, and does not indicate information of M1 frequency domain reserved resources of the first OFDM symbol.

It is assumed that the system parameters are: SCS=15KHz, IFFT point number N=2048k, original CP length=144k; the length after CP expansion is 512k, the CP increment M=512k-144k=368k, where k is a positive integer (can be 1 or other values). For the sake of ease of description, in this embodiment, it is simplified as: N=2048, original CP length=144, the length after CP expansion is 512, and the CP increment M=512-144=368.

In this example, the network device indicates to the UE the target OFDM symbol or slot that requires CP extension, and related information for the UE to calculate M. For the M1 frequency domain reserved resources of the first OFDM symbol, one of the following methods may be used for indication, that is, the network device does not need to indicate.

(1) The M1 frequency domain reserved resources are placed outside the scheduled data, that is, the frequency domain reserved resources are not within the frequency domain resources for UE to receive data.

(2) the information of M1 frequency domain reserved resource is indicated through existing rate matching indication information.

The process of performing data transmission by using the CP extension method includes:

at the network device side:

Step 41a: determining a CP time domain extension increment M.

The CP extension increment is relative to the CP length before extension, and its unit can be microseconds (or millimeters), sampling points, or the time unit of IFFT sample points. For ease of description, it is assumed here that the unit of M is the same as the time unit of FFT sample points, that is, the duration of M CPs is equivalent to the duration of M points in the N sample points of FFT output. The related increment M is related to the quality of the transmitted service and the radius of the cell.

For example, a value of the M is as follows:

When the CP length before extension is 144, and the CP length after extension is 512, then M is equal to 512-144=368;

when the CP length before extension is 160, and the CP length after extension is 512, then M is equal to 512-160=352.

Step 42a: for a symbol n+1, determining "appropriate" positions and "appropriate" values of the M1 reserved resources so that after performing IFFT, time domain values of M specific positions in the OFDM symbol n+1 are equal to first M time domain values of an OFDM symbol n.

The symbol n is an OFDM symbol that requires CP extension, and the symbol n+1 is the first OFDM symbol. For the symbol n+1, if after performing IFFT, the values of M specific time domain positions in the OFDM symbol n+1 are equal to the first M time domain values of the OFDM symbol n, it is equivalent to performing CP extension on the symbol n+1.

It is to be noted that "equal" here is equivalent in an engineering sense. When a difference between two values is less than an error range, they can be considered equal, and the specific error range is implemented by a data transmission end (for example, the error range is 3% or 5%).

This step takes M=368 as an example to describe the content of "values of M specific time domain positions in the OFDM symbol n+1 are equal to the first M=368 time domain values of the OFDM symbol n".

Description method 1: for an OFDM symbol n, in a sequence formed after IFFT transformation, the first M=368 sequence values are Y0;

for an OFDM symbol n+1, in a sequence formed after IFFT transformation and CP addition, the first M=368 sequence values are Y1;
the above Y0 is equal to Y1.

Description method 2:

for an OFDM symbol n: assuming that a frequency domain data length N=2048, after IDFT transformation, a data OFDM data sequence $x_0, x_1, \ldots x_{N-2}, x_{N-1}$ is formed; where the first M (such as M=368) time domain values are: $v_0, v_1, v_2, \ldots v_{M-1}$;

for an OFDM symbol n+1: assuming that a frequency domain data length $N_u^\mu = N = 2048$, after IDFT transformation, a data OFDM data sequence $x_0, x_1, \ldots x_{N-2}, x_{N-1}$ is formed;

where, for m = 0 to $N_{CP}^\mu - 1 = 143$, the following values need to meet the conditions:

$$x_{N-N_{CP}^\mu} = v0, \quad x_{N-N_{CP}^\mu+1} = v1, \quad x_{N-N_{CP}^\mu+2} = v2, \quad \ldots x_{N-1} = v_{N_{CP}^\mu-1}$$

the above is the last $N_{CP}^\mu = 144$ data sequences of the OFDM symbol n+1, and is also the original CP data of the symbol;

for $m = N_{CP}^\mu = 144$ to M - 1, the following values need to meet the conditions:

$$x_0 = v_{N_{CP}^\mu}, \quad x_1 = v_{N_{CP}^\mu+1}, \quad x_2 = v_{N_{CP}^\mu+2}, \quad \ldots x_{M-N_{CP}^\mu} = v_{M-1};$$

the above are the first 224 data sequences of the OFDM symbol n+1.

where $N_{CP}^\mu$ represents the length before CP extension.

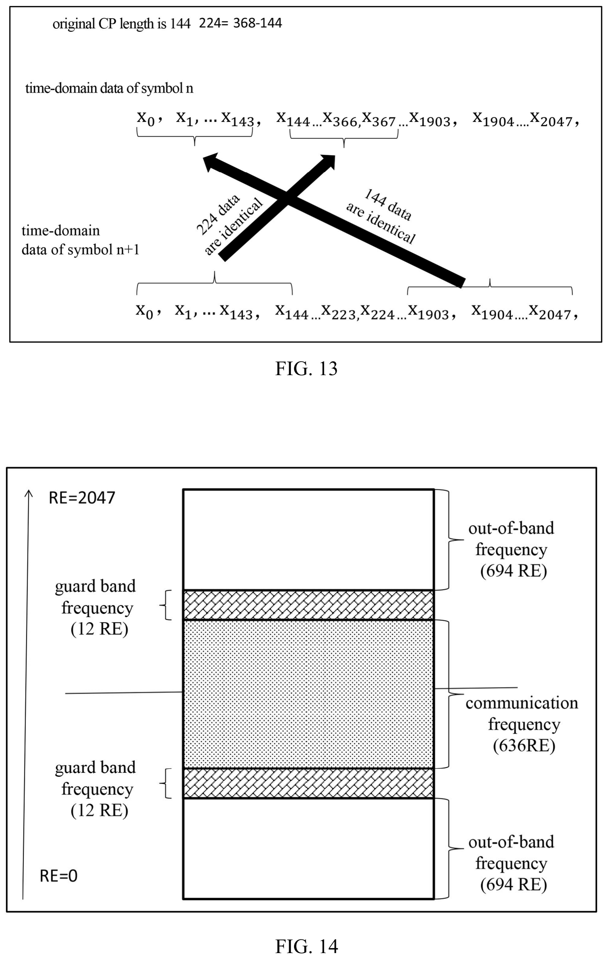

The relationship between IFFT time domain output samples of the OFDM symbol n+1 and the OFDM symbol n is shown in FIG. 13, where M time domain values of a latter symbol are equal to the first M time domain values of the previous symbol.

The following describes how to determine positions of M1 frequency domain reserved resources and values corresponding to the positions of the M1 frequency domain resources.

It is assumed that M1 takes a value M, and an input frequency domain data is X(n), n=0,1,···N-1; where there are M1 frequency domain data $\{X(k_0), X(k_1), \ldots X(k_{M1-1})\}$ that do not transmit any information, that is, any value can be set to meet the same requirement as the above M data sequences; here $k_0, k_1, \ldots k_{M1-1}$, are non-repeating integers greater than or equal to 0 and less than or equal to N-1. The number of combinations of $k_0, k_1, \ldots k_{M1-1}$ is: $K = C_{M1-1}^N = \frac{N!}{M1! * (N-M1)!}$, that is, combinations of selecting M1 elements from N elements.

The other frequency domains are used to transmit data (i.e., the other frequency domain data are fixed values and cannot be changed). That is, the transmitting end sets appropriate M data $\{X(k_0), X(k_1), \ldots X(k_{M-1})\}$.

According to the following IDFT formula:

$$x(n) = \frac{1}{N} \sum_{k=0}^{k=N-1} X(k) W_N^{-k*n}, n = 0,1, \ldots N-1$$

M linear equations with M1 variables can be listed. That is, by solving the M linear equations with M1 variables, at least one set of "numerical solutions" can be obtained.

Further, since the number of combinations of $k_0, k_1, \ldots k_{u1-1}$ is K, that is, at least K sets of "numerical solutions" can be obtained.

One set of "appropriate" values is found from the K sets of "numerical solutions", that is, determining the "appropriate" positions and "appropriate" values.

A solution that satisfies an "appropriate" value can be defined as one that satisfies at least one of the following conditions:

1) modulus of all M1 values is less than a threshold;
2) an average value of moduli of M1 values is less than a threshold.

It is to be noted that when solving a M1-variable linear equation, a "numerical solution" may not be the numerical value of the solution to the equation in the mathematical sense. When an error between two numerical values is within a certain range, it can be considered as the solution to the equation.

In addition to being greater than or equal to M, the value of M1 can also be less than M. Considering randomness of input data of the OFDM symbol n+1, there may be other situations where the number of reserved resources is less than M (such as M1=0, M1=M/2), and the above equation relationship is satisfied.

On the M1 frequency domain reserved resources, the data can be transmitted in a rate matching manner (i.e., bypassing these resources when mapping data) or in a puncturing manner (i.e., data can be mapped to the frequency domain reserved resources, and the receiving end considers that it is punctured).

Among the combinations of M1 frequency domain reserved resources, the combinations occupying important frequency domain positions are discarded, for example, original RE positions are used to transmit PDCCH or DMRS.

Step 43a: indicating information of one or more OFDM symbols n to the UE, and transmitting OFDM symbol data.

The OFDM symbols n (one or more) that are determined to require CP extension and the extension amount M are configured by the network device through high layer signaling or indicated by dynamic scheduling signaling.

One or more symbols that requires CP extension configured by the network device through high layer signaling may be: all downlink symbols (slots) or a part of downlink symbols (slots) on a carrier

One or more symbols that requires CP extension configured by the network device through scheduling signaling may be all symbols or part of scheduled symbols.

Specifically, there are two methods for determining the M value.

(1) The network device only indicates an extended CP length, and an extension increment M is calculated by the UE itself.

For example, the network device indicates that an extended CP length is 512, then:

if a CP length before extension is 144, then M is equal to 512-144=368;
if ta CP length before extension is 160, then M is equal to 512-160=352.

(2) The base station directly indicates an increment M.

For example, the base station indicates two M values, namely M=368 and M=35, then:

if a CP length before extension is 144, then M=368;
if a CP length before extension is 160, then M=352.

In this embodiment, it is assumed that the network device determines the value of M by using the above method (1).

The network device transmits OFDM symbols after processes such as CP addition.

It is to be noted that the above steps 41a and 42a are implemented by the network device itself. When the network device configures one or more CP extended symbols through high layer signaling, it can further indicate transmission of common messages (such as physical broadcast channel (PBCH), remaining minimum system information (RMSI) information, paging information), control channel for transmitting common messages, and whether to use an OFDM symbol with extended CP for transmission.

At the UE side:

Step 41b: determining a CP time domain extension increment M.

The UE receives configuration or indication information from the network device, and this information is used by the UE to obtain the CP time domain extension increment M. The extension increment M is relative to the CP length before extension, and its unit can be microseconds (or milliseconds), sampling points, or IFFT sample time units.

The network device may directly indicate the value of the extension increment M, or may indicate the extended CP length. If the extended CP length is indicated, the UE may determine the increment M based on the current symbol CP length and the extended CP length.

For ease of description, it is assumed here that the unit of M is the same as the time unit of the FFT sample point. For example, it is assumed that the number of IFFT sample points is 2048;

the CP length before expansion is 144, and the CP length after expansion is 512, then M is equal to 512-144=368; the CP length before extension is 160, and the CP length after extension is 512, then M is equal to 512-160=352.

Step 42b: receiving information of an OFDM symbol n that requires CP extension.

The UE receives indication information transmitted by the network device, where the information is used to indicate one or more OFDM symbols n for CP extension, which may be a high layer signaling configuration sent by the network device, or a dynamic scheduling signaling.

One or more symbols that requires CP extension configured by the network device through high layer signaling may be: all downlink symbols (slots) or a part of downlink symbols (slots) on a serving cell.

One or more symbols that requires CP extension configured by the network device through scheduling signaling may be all symbols or part of scheduled symbols.

all symbols or part of the scheduled symbols.

For the OFDM symbol n with extended CP, the UE determines timing information for receiving the symbol (i.e., a starting position of a receiving data window for performing DFT) according to the value of M. Specifically, it is assumed that the synchronization time determined by the UE according to the synchronization signal is t0, the synchronization time for receiving the OFDM symbol n is delayed by M time units, i.e., t0+t(M).

As another optional embodiment, it is assumed that the network device indicates to the UE the target OFDM symbol that requires CP extension, and indicates information of M1 frequency domain reserved resources of the first OFDM symbol.

This embodiment only describes how the network device indicates information of M1 frequency domain reserved resources, and other parts are the same as the above optional embodiments and are not described in detail here.

The relevant information of M1 frequency domain reserved resources is configured by the network device through high layer signaling or indicated by dynamic scheduling signaling.

One or more symbols that requires CP extension configured by the network device through high layer signaling may be: all downlink symbols (slots) or a part of downlink symbols (slots) on a carrier

One or more symbols that requires CP extension configured by the network device through scheduling signaling may be all symbols or part of scheduled symbols.

The following example illustrates the use of scheduling signaling to indicate information of M1 frequency domain reserved resources of one or more symbols.

Method 1: K bitmap indications are configured through high layer signaling to indicate which resources among N frequency domain resources are frequency domain reserved resources.

Assuming N=8, the network device configures 4 bitmap indications for indicating 4 types of frequency domain reserved resources, as shown in the following Table 2.

Table 2: high-layer signaling indicating frequency domain reserved resources

| configuration index | Configuration value | Meaning |
| --- | --- | --- |
| 1 | 0,0,0,0,0,0,0,0 | M1=0 reserved RE resources, i.e., there are no reserved RE resources |
| 2 | 0,0,0,0,0,0,0,1 | M1=1 reserved RE resource, located at the eighth RE |
| 3 | 1,0,0,0,0,0,0,0 | M1=1 reserved RE resource, located at the first RE |
| 4 | 1,0,0,0,0,0,0,1 | M1=2 reserved RE resources, located at the 1st and 8th REs |

Method 2: the network device indicates configuration index in a dynamic scheduling signaling.

It is to be noted that when the network device indicates an OFDM symbol n for CP extension, M1 frequency domain reserved resources are applied to an OFDM symbol n+1, which is a next symbol to the symbol for CP extension.

When the scheduling signaling schedules multiple symbols such as num=7, and all 7 symbols requires CP extension, M1 frequency domain reserved resources of all 7 corresponding symbols can use the same configuration index or different configuration indexes, which is not limited here.

For the last symbol that requires CP extension in scheduled data, the information of its M1 frequency-domain reserved resources may be exempted from indication. When the scheduling signaling schedules multiple symbols, for example, num=4 (e.g., syb1, syb2, syb3, syb4), and all four symbols require CP extension, M1 frequency-domain reserved resources corresponding to the last symbol syb4 are applied to syb5. However, since syb5 is not within the scope of the scheduling signaling, the method of exempting from indication can be adopted for syb5. In the case of exempting from indication, the method for the UE to determine the frequency-domain reserved resources refers to the above embodiments, and will not be elaborated here.

As an optional embodiment, for the method of determining M1 "appropriate" frequency domain reserved resource positions and the "appropriate" value of the frequency domain reserved resource, in addition to traversing all positions, other methods can also be used for optimization. One specific optimization method is as follows.

Step 51: preferentially placing M1 frequency domain reserved resources on guard bandwidth and out-of-band RE resources.

In this embodiment, the M1 frequency domain reserved resources are preferentially placed on the guard bandwidth and out-of-band RE resources. The power corresponding to the set data value does not exceed a threshold range specified by the standard protocol.

For example, it is assumed that the parameters are: N=2048 for the FFT transformation parameter, the communication bandwidth is 10MHz (equivalent to 55 RBs, i.e., 660 REs); the guard band is 2RBs, which is equivalent to 24 REs. Among N=2048 REs, the number of out-of-band REs is 2048-660=1388, as shown in FIG. 14.

In a channel bandwidth of 10MHz, assuming that the maximum transmission power of the network device is 40 watts, the maximum transmission power is 4 watts per 1MHz bandwidth, which is converted into dBm as follows: 10*1g(4*1000)=36dBm. Assuming that the input of IFFT is 16 bits (i.e., the value range is -32768 to 32767), the setting range of the out-of-band frequency and the guard band frequency domain is as shown in the following Table 3.

Table 3: setting range of out-of-band frequency and guard band frequency domain

| RE index | maximum transmission power | value setting rang | Remarks |
|---|---|---|---|
| 0-267 | -13dBm | -115 to 115 | 4.5MHz |
| 268-535) | -10dBm | -163 to 163 | 4MHz |
| 536-693 | -13 dBm | -115 to 115 | 1MHz |
| 694-705 | -10dBm | -163 to 163 | 10MHz bandwidth (communication channel) |
| 706-1341 | 36 dBm | -32768 to 32767 | |
| 1342-1353 | -10dBm | -163 to 163 | |
| 1354-1612 | -13dBm | -115 to 115 | 1MHz |
| 1613-1880 | -10dBm | -163 to 163 | 4MHz |
| 1881-2047 | -13dBm | -115 to 115 | 4.5MHz |

One calculation method for the above value setting range is: when the maximum transmission power is -13dBm, then,

a ratio of power value ranges of communication and out-of-band is: power (10,(36+13)/10)=79810; power() is an exponential function;
a ratio of value ranges of communication and out-of-band ranges is: sqrt(79810)=282;
an out-of-band value range is: 32767/282=115.

Step 52: determining positions of the frequency domain reserved resources on the communication frequency.

Through the step 52, a part or all of the M1 frequency domain reserved resources are preferentially determined. If the above extended CP function can be achieved through the step 52, there is no need to set the frequency domain reserved resources on the communication frequency. That is, there is no need to indicate information of frequency domain reserved resources to the UE.

Further, when setting the frequency domain reserved resources on the communication frequency, if frequency domain reserved resources are not included in frequency domain resources for data scheduling, there is no need to indicate information of frequency domain reserved resources to the UE.

The guard bandwidth in the above embodiment is used to avoid frequency domain interference of adjacent channels in a granted spectrum. Usually, the transmitting end needs to reserve some frequency domain RE resources, and the power of these frequency domain reserved resources needs to be strictly limited, that is, the power cannot exceed a certain threshold. Usually, the network device does not send any data information on these frequency domain reserved resources. For example, assuming SCS=15KHz, the base station is allocated a bandwidth of 10MHz, with a total of 55 RBs

# EP 4 746 359 A1

(equivalent to 660 RE resources, one RB contains 12 REs), the network device and the UE only communicate in 53 RBs (referred to as communication bandwidth), that is, 2 RBs are reserved without transmitting any information.

For out-of-band leakage limit: when the transmitting transmits a signal, due to limitations of hardware components, the relevant signal is transmitted not only in the communication channel, but also leak out of the communication bandwidth. The power of this leaked signal cannot exceed a certain threshold. The out-of-band leakage threshold values are shown in the following Table 4.

In the above embodiment of the present disclosure, for the to-be-transmitted n-th OFDM symbol, "appropriate" positions and "appropriate" values of M1 RE resources are selected on N REs input to the IFFT, thereby achieving the effect of extending the CP length by M samples for the (n-1)-th OFDM symbol. The network device indicates the symbol n that requires CP extension and the CP extension increment, and can indicate information of M1 frequency domain reserved resources.

Table 4: out-of-band leakage threshold value

| out-of-band leakage threshold value (dBm) | | | | | | | | | | | | | |
|---|---|---|---|---|---|---|---|---|---|---|---|---|---|
| $\Delta f_{OOB}$ (MHz) | 5 MHz | 10 MHz | 15 MHz | 20 MHz | 25 MHz | 30 MHz | 40 MHz | 50 MHz | 60 MHz | 80 MHz | 90 MHz | 100 MHz | measurement bandwidth |
| ± 0-1 | -13 | -13 | -13 | -13 | -13 | -13 | -13 | | | | | | 1% channel bandwidth |
| ± 0-1 | | | | | | | | -24 | -24 | -24 | -24 | -24 | 30 kHz |
| ± 1-5 | -10 | -10 | -10 | -10 | -10 | -10 | -10 | -10 | -10 | -10 | -10 | -10 | 1 MHz |
| ± 5-6 | -13 | -13 | -13 | -13 | -13 | -13 | -13 | -13 | -13 | -13 | -13 | -13 | |
| ± 6-10 | -25 | | | | | | | | | | | | |
| ± 10-15 | | -25 | | | | | | | | | | | |
| ± 15-20 | | | -25 | | | | | | | | | | |
| ± 20-25 | | | | -25 | | | | | | | | | |
| ± 25-30 | | | | | -25 | | | | | | | | |
| ± 30-35 | | | | | | -25 | | | | | | | |
| ± 35-40 | | | | | | | | | | | | | |
| ± 40-45 | | | | | | | -25 | | | | | | |
| ± 45-50 | | | | | | | | | | | | | |
| ± 50-55 | | | | | | | | -25 | | | | | |
| ± 55-60 | | | | | | | | | | | | | |
| ± 60-65 | | | | | | | | | -25 | | | | |
| ± 65-80 | | | | | | | | | | | | | |
| ± 80-85 | | | | | | | | | | -25 | | | |
| ± 85-90 | | | | | | | | | | | | | |
| ± 90-95 | | | | | | | | | | | -25 | | |
| ± 95-100 | | | | | | | | | | | | | |
| ± 100-105 | | | | | | | | | | | | -25 | |

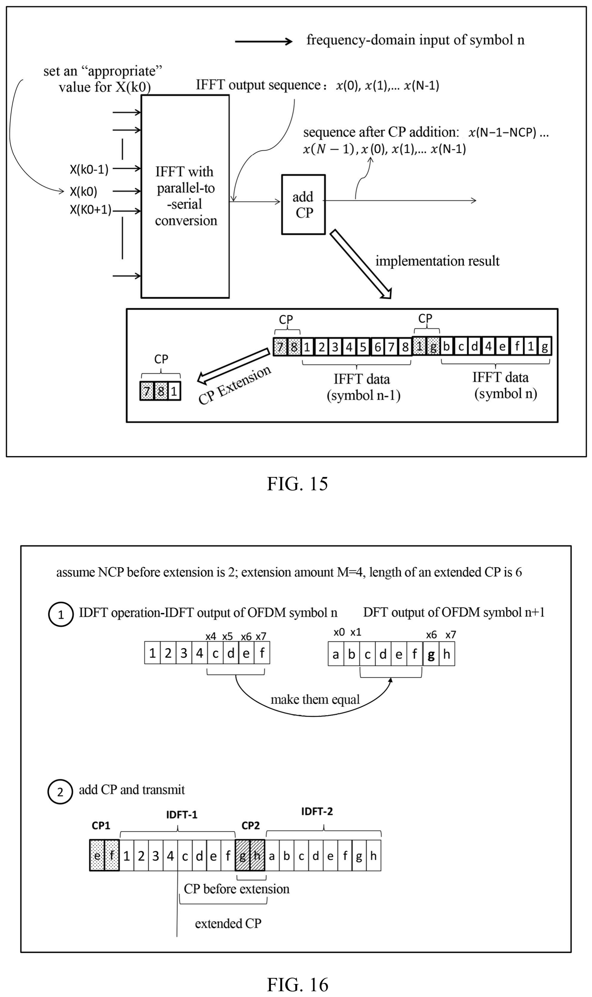

It is to be noted that M1 is only related to the FFT size and the CP extension amount, and has nothing to do with the actual number of occupied PRBs. In theory, M1 RE resource positions can be any positions. If optimized, the value of M1 can be less than M, or greater than or equal to M. The implementation effect is shown in FIG. 15. Assuming that for the symbol n-1, the CP needs to be extended by 1 FFT sample point, then the RE resource at the specific k0 position of symbol n is set with data of an "appropriate" value, so that the effect of extending CP of the symbol n-1 from 2 FFT samples to 3 FFT samples can be achieved.

Assuming that k0 takes the value of 0, in order to achieve the effect of extending CP for the symbol n-1 by 3 FFT samples, that is, the CP data is "781", it is necessary to ensure that the first number of the CP data of the symbol n is "1", which corresponds to a value of the second to last data of the IFFT output of the symbol n. That is, X(k0-0) needs to be set to an "appropriate" value so that the (N-2)-th value in the time domain values of the symbol n is "1".

For k0, the value of X(k0) can be determined by using the following method. Assuming the length of the FFT is N, an "appropriate" value of the second-to-last data in the symbol n being "1" can be expressed as x(N-2)="1".

From the IDFT formula, it is known that:

$$x(N-2) = "1" = \frac{1}{N} \sum_{k=0}^{k=N-1} X(k) W_N^{-k*(N-2)}$$

Thus, $N * "1" = X(0) + \sum_{k=1}^{k=N-1} X(k) W_N^{-k*(N-2)}$ .

That is, $X(0) = N * "1" - \sum_{k=1}^{k=N-1} X(k) W_N^{-k*(N-2)}$ .

From the above method for calculating values of X(k0), it can be known that different k0 values correspond to different X(k0) values. Considering that the reserved resources are not used to transmit any information, the smaller the X(k0) value, the smaller the power occupied by the RE resources. Therefore, the best practice is to traverse all k0 values so that the corresponding X(k0) value is the smallest, or X(k0) is less than a certain threshold. Therefore, the "appropriate" position k0 of the reserved resource RE can be understood as the minimum X(k0) value, or less than a certain threshold. This method does not cause modification of the physical layer structure, can reduce the complexity of protocol formulation, does not increase the implementation cost of the device, and is compatible with legacy versions of UE.

In the above example, the first OFDM symbol is an adjacent symbol following the target OFDM symbol. In the embodiment of the present disclosure, the first OFDM symbol may also be an adjacent symbol before the target OFDM symbol that requires CP extension.

For example, the target OFDM symbol is the symbol n+1, and the first OFDM symbol is the symbol n. For the symbol n, the network device determines "appropriate" positions and "appropriate" values of M1 reserved RE resources, so that after performing IFFT, the last M time domain values in the OFDM symbol n are equal to M specific time domain values in the symbol n+1. Here, it is assumed that the symbol n+1 is an OFDM symbol that requires CP extension.

For the symbol n+1, if after performing IFFT, the values of M specific time domain positions in the OFDM symbol n+1 are equal to the last M time domain values of the OFDM symbol n, it is equivalent to performing CP extension on the symbol n+1.

For example, for the symbol n+1, an expected CP length after extension is NECP=512, the CP length before extension is NCP=144, then the CP extension increment M=368.

Assuming that the frequency domain data length is N=2048, after IDFT transformation, a data OFDM data sequence $x_0$, $x_1$, ... $x_{N-2}$, $x_{N-1}$ is formed; within the last M values of this sequence, the first value is: $x_{N-NECP} = x_{1536}$; then, the M=368 specific time domains $x_{1536}$, $x_{1537}$, ...$x_{1903}$ in the symbol n+1 correspond to the values $v_0$, $v_1$, ... $v_{M-1}$ respectively.

For the symbol n:

assuming that the frequency domain data length is $N_u^\mu = N = 2048$ , after IDFT transformation, a data OFDM data sequence $x_0$, $x_1$, ... $x_{N-2}$, $x_{N-1}$ is formed;

the last M=368 data are $x_{N-1-M+1}$, $x_{N-1-M+2}$, ... $x_{N-1}$, which are corresponding to the values $v_0$, $v_1$, ...$v_{M-1}$ respectively;

where $N_{CP}^\mu$ represents the number of IFFT samples before CP extension.

The relationship between the IFFT time domain output samples of the OFDM symbol n+1 and the OFDM symbol n is shown in FIG. 16.

For the symbol n, a method for the network device to determine "appropriate" positions of M1 reserved RE resources and "appropriate" values is as follows.

It is assumed that an input frequency domain data is X(n), n = 0,1, ... N - 1; where there are M1 frequency domain data {X(k0), X(k1), ... X(kM1-1)} that do not transmit any information, that is, any value can be set. By setting M1 appropriate frequency domain values, the symbol n after IFFT transformation meets the same requirement as the above M data sequences.

Here $k_0$, $k_1$,...$k_{u1-1}$ are integers greater than or equal to 0 and less than or equal to N-1 and are not repeated. The number of combinations of $k_0$, $k_1$,...$k_{M1-1}$ is: $K = C_{M1-1}^N = \frac{N!}{M1! * (N-M1)!}$, that is, combinations of selecting M1 elements from N elements. The other frequency domains except for the M1 frequency domain reserved resources are used to transmit data (i.e., the other frequency domain data are fixed values and cannot be changed).

The following describes how to determine M1 data {X(k0), X(k1),...X(kM-1)} that meet the conditions.

It is assumed that the frequency domain data {$X(k_0)$, $X(k_1)$, ... $X(k_{M-1})$} are unknown numbers to be solved. There are M known data in the time domain sequence $x_0$,$x_1$, ... $x_{N-2}$, $x_{N-1}$. According to the following IDFT formula:

$$x(n) = \frac{1}{N} \sum_{k=0}^{k=N-1} X(k) W_N^{-k*n}, \quad n = 0,1, ... N-1$$

when M1 is greater than or equal to M, M linear equations with M1 variables can be listed. That is, by solving the M linear equations with M1 variables, at least one set of "numerical solutions" can be obtained.

Further, since the number of combinations of $k_0$, $k_1$,...$k_{M1-1}$ is K $(K = C_{M1-1}^N = \frac{N!}{M1! * (N-M1)!})$, that is, at least K sets of "numerical solutions" can be obtained.

One set of "appropriate" values is found from the K sets of "numerical solutions", that is, determining the "appropriate" positions and "appropriate" values of the M1 reserved resources.

A solution that satisfies an "appropriate" value can be defined as one that satisfies at least one of the following conditions:

modulus of all M1 values is less than a threshold;
an average value of moduli of M1 values is less than a threshold.

It is to be noted that when solving a M1-variable linear equation, a "numerical solution" may not be the numerical value of the solution to the equation in the mathematical sense. When an error between two numerical values is within a certain range, it can be considered as the solution to the equation.

In addition to being greater than or equal to M, the value of M1 can also be less than M. Considering randomness of input data of the OFDM symbol n+1, there may be other situations where the number of reserved resources is less than M (such as M1=0, M1=M/2), and the above equation relationship is satisfied.

On the M1 frequency domain reserved resources, the data can be transmitted in a rate matching manner (i.e., bypassing these resources when mapping data) or in a puncturing manner (i.e., data can be mapped to the frequency domain reserved resources, and the receiving end considers that it is punctured).

Among the combinations of M1 frequency domain reserved resources, the combinations occupying important frequency domain positions are discarded, for example, original RE positions are used to transmit PDCCH or DMRS.

It is to be noted that in the case where the first OFDM symbol is the adjacent symbol before the target OFDM symbol that requires CP extension, there is no need for the network device to indicate the CP extension increment M to the UE, nor does the UE side need to calculate this value. However, the transmitting end needs to perform symbol order reversal processing, for example, processing the symbol n+1 first, followed by the symbol n. Considering that common signaling needs to maintain compatibility with legacy UE versions, this method can be applied to transmission of common signaling, thereby improving reception performance of common signaling. For example, this method can be used to transmit synchronization signal blocks (SSB) and SIB1 information.

In the case where the first OFDM symbol is an adjacent symbol before the target OFDM symbol that requires CP extension, the network device only needs to transmit information of M1 reserved resources of the first OFDM symbol to the UE and transmit OFDM symbol data.

The following describes an example of an implementation method for using scheduling signaling to indicate information of M1 frequency domain reserved resources of one or more symbols.

Method 1: K bitmap indications are configured through high layer signaling to indicate which resources among N frequency domain resources are frequency domain reserved resources.

Assuming N=8, the base station configures 4 bitmap indications for indicating 4 types of frequency domain reserved resources, as shown in the following Table 5.

Table 5: high-layer signaling indicating frequency domain reserved resources

| configuration index | Configuration value | Meaning |
| --- | --- | --- |
| 1 | 0,0,0,0,0,0,0,0 | M1=0 reserved RE resources, i.e., there are no reserved RE resources |

(continued)

| configuration index | Configuration value | Meaning |
| --- | --- | --- |
| 2 | 0,0,0,0,0,0,0,1 | M1=1 reserved RE resource, located at the eighth RE |
| 3 | 1,0,0,0,0,0,0,0 | M1=1 reserved RE resource, located at the first RE |
| 4 | 1,0,0,0,0,0,0,1 | M1=2 reserved RE resources, located at the 1st and 8th REs |

Method 2: the network device indicates configuration index in a dynamic scheduling signaling.

It is to be noted that when CP extension is performed on the OFDM symbol n+1, M1 frequency domain reserved resources are applied to the OFDM symbol n, that is, applied to a symbol before the symbol for CP extension.

When the scheduling signaling schedules multiple symbols such as num=7, and all 7 symbols requires CP extension, M1 frequency domain reserved resources of all 7 corresponding symbols can use the same configuration index or different configuration indexes, which is not limited here.

For the first symbol that requires CP extension in the scheduled data, the information of the M1 frequency domain reserved resources can be exempted from indication, which will not be described in detail here. When the scheduling signaling schedules multiple symbols, for example, num=4 (e.g., syb1, syb2, syb3, syb4), and all four symbols require CP extension, the M1 reserved resources corresponding to the first symbol syb1 are applied to syb0, thus the method of exempting from indication can be used for syb0. In the case of exempting from indication, the method for the UE to determine the frequency domain reserved resources refers to the above embodiment, which will not be described in detail here.

The UE receives information of M1 frequency domain reserved resources transmitted by the network device. The information is used to determine position information of M1 reserved REs, and may be high layer signaling configuration or dynamic scheduling signaling transmitted by the network device.

For example, the network device configures information of M1 frequency domain reserved resources through high layer signaling, and the information can be applied to all downlink symbols (slots) on a carrier, or a part of the downlink symbols (slots). Alternatively, the network device indicates one or more pieces of "information of M1 frequency domain reserved resources" through scheduling signaling, which can be all symbols or part of the symbols of the scheduled symbols.

The above "information of M1 frequency domain reserved resources" is applied to the OFDM symbol n, which is adjacent to the OFDM symbol n+1 that requires CP extension. On the UE side, these resources are considered as unavailable resources, that is, the network device is considered not to transmit data on these resources.

It is to be noted that each OFDM symbol n+1 with the extended CP corresponds to one OFDM symbol n to which the information of M1 frequency domain reserved resources is applied. When there are multiple OFDM symbols n+1 with the extended CP, they correspond to multiple OFDM symbols n to which the information of M1 frequency domain reserved resources is applied.

In this embodiment, the effect of CP extension is achieved without altering the frame structure (i.e., there is no need to modify 1 slot containing 14 symbols to 1 slot containing 12 symbols). Meanwhile, the network device can flexibly set the CP increment M according to actual service requirements to accommodate the distance between different cells in the SFN area. Meanwhile, it is compatible with the legacy UE to receive broadcast and multicast services, thereby saving air interface resources.

The following takes downlink data transmission as an example to illustrate the implementation effect of this embodiment when the first OFDM symbol is an adjacent symbol before the target OFDM symbol.

For example, it is assumed that an OFDM symbol includes a CP of 2 units in length and data of 8 units (i.e., the number of IFFT points). When the multipath delay difference $\tau$ is less than or equal to 2 units in length, there is no mutual interference between the multipaths; when the multipath delay difference $\tau$ is equal to 3 units in length, there is interference between the multipaths, as shown in FIG. 5. Correspondingly, if the length of the CP is 3 time units, there is no inter-symbol interference, as shown in FIG. 6.

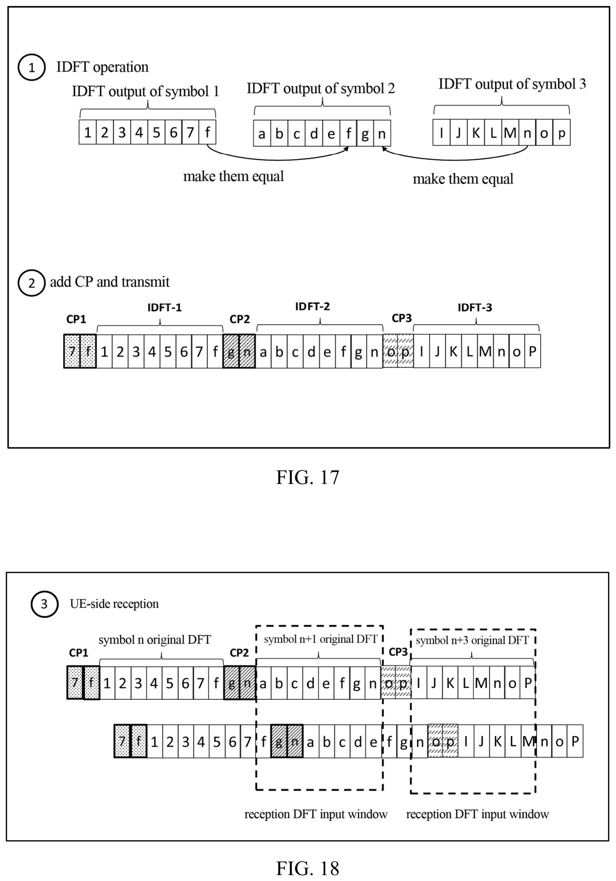

The following describes CP extension of a symbol 1 and a symbol 2, with an extension amount M=1, as shown in FIG. 17. It is assumed that the IDFT output of the symbol 3 is {I, J, K, L, M, n, o, p}. That is, the first value is: $x_{N-NECP} = x_5 = $ "n".

An "appropriate value" is set at a specific frequency domain position of the symbol 2, so that in the IDFT output sequence of the symbol 2, the last M=1 data: $x_{N-1-M+1} = x_7$, should be equal to "n".

It is assumed that the IDFT output sequence of the symbol 2 is finally: {a, b, c, d, e, f, g, n}. That is, the first value of the symbol 2 is: $x_{N-NECP} = x_5 = $ "f".

An "appropriate value" is set at a specific frequency domain position of the symbol 1, so that in the IDFT output sequence of the symbol 1, the last M=1 data $x_{N-1-M+1} = x_7$, should be equal to "f".

It is assumed that the IDFT output sequence of the symbol 1 is finally: { 1,2,3,4,5,6,7,f}.

The transmitting end (here, the network device) adds CP according to the frame structure parameter of CP=2 to form OFDM transmission data.

At the receiving end (here, the UE), the starting position of the DFT input window is still set according to CP=2, and the DFT operation (time domain to frequency domain) is performed. As shown in FIG. 18, when the multipath difference is 3 units,

for the symbol n+2, the multipath data in the DFT window each includes: {I, J, Q, L, M, n, o, p}; that is, the multipath information is a periodic signal, and there is no inter-symbol interference in the multipath;

for the symbol n+1, the multipath data in the DFT window includes: {a, b, c, d, e, f, g, n}; that is, the multipath information is a periodic signal, and there is no inter-symbol interference in the multipath.

It is to be noted that, at the UE end, the DFT input window can still maintain the synchronization time obtained according to the synchronization signal (the original DFT window starting position of the symbol), which has nothing to do with the value of M.

As another optional embodiment, it is assumed that an OFDM symbol includes a CP of 2 units in lengths and data of 8 units (i.e., the number of IFFT points). When the multipath delay difference $\tau$ is less than or equal to 2 units in lengths, there is no mutual interference between the multipaths; when the multipath delay difference $\tau$ is equal to 5 units in lengths, there is interference between the multipaths, as shown in FIG. 9. Accordingly, if the length of the CP is 5 time units, there is no inter-symbol interference, as shown in FIG. 10.

The following describes the CP extension of a symbol 1 and a symbol 2, with an extension amount M=3.

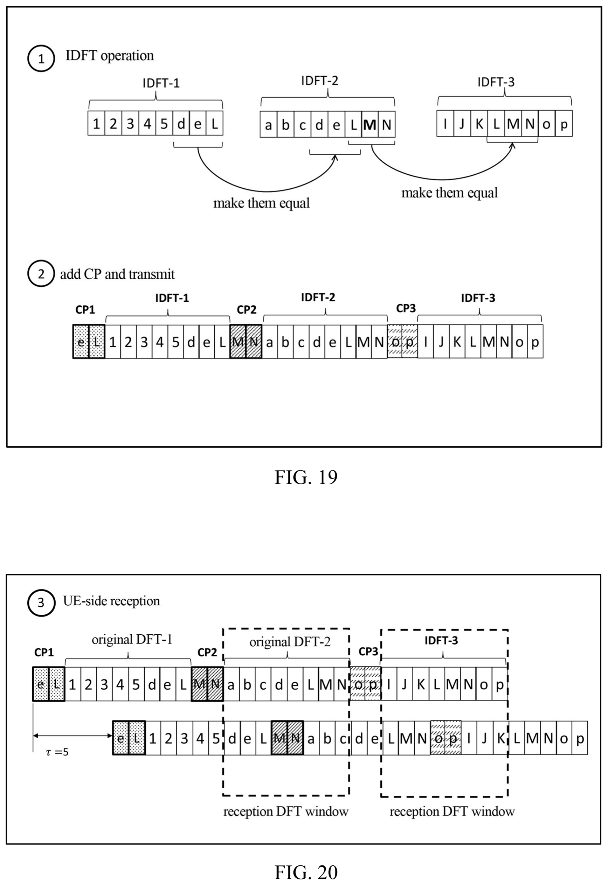

As shown in FIG. 19, it is assumed that the IDFT output of the symbol 3 is {I, J, K, L, M, n, o, p}. That is, the first value is: $x_{N-NECP} = x_3$="L", starting from the first value, the M value sequences are: $x_3 = L$, $x_4 = M$, $x_3 = N$.

An "appropriate value" is set at a specific frequency domain position of the symbol 2, so that in the IDFT output sequence of the symbol 2, the last M=3 data $x_{N-1-M+1} = x_5$, $x_6$, $x_7$ are equal to "L", "M", "N" respectively.

It is assumed that the IDFT output sequence of the symbol 2 is finally: {a, b, c, d, e, L, M, N}. That is, the first value of the symbol 2 is: $x_{(N-NECP)}=x_3$="d"; starting from the first value, the M value sequences are: $x_3$=d, $x_4$=e, $x_3$=L;

An "appropriate value" is set at a specific frequency domain position of the symbol 1, so that in the IDFT output sequence of the symbol 1, the last M=3 data: $x_{N-1-M+1} = x_7$, $x_6$, $x_7$, should be equal to "d", "e", "L" respectively.

It is assumed that the IDFT output sequence of the symbol 1 is finally: {1, 2, 3, 4, 5, d, e, L}.

The transmitting end adds CP according to the frame structure parameter of CP=2 to form OFDM transmission data.

At the receiving end, the starting position of the DFT input window is set according to CP=5, and the DFT operation (time domain to frequency domain) is performed. As shown in FIG. 20, when the multipath difference is 5 units;

for the symbol n+2, the multipath data in the DFT window each includes: {I, J, Q, L, M, n, o, p}; that is, the multipath information is a periodic signal, and there is no inter-symbol interference in the multipath;

for the symbol n+1, the multipath data in the DFT window each includes: {a, b, c, d, e, f, g, n}. That is, the multipath information is a periodic signal, and there is no inter-symbol interference in the multipath.

It is to be noted that, at the UE end, the DFT input window can still use the original DFT starting window position of the symbol, that is, the synchronization time obtained according to the synchronization signal can still be applied to the DFT window starting position of the extended CP without delaying M time units. That is, the UE uses the original DFT starting window position to receive the symbol n+1, which can achieve the purpose of extending the CP (as shown in FIG. 20, the extended CP is considered to be "f, g, n", the actual symbol length has not changed and the CP structure has not changed).

This embodiment does not cause modification of the physical layer structure, can reduce the complexity of protocol formulation, does not increase the implementation cost of the device, and is compatible with legacy versions of UE.

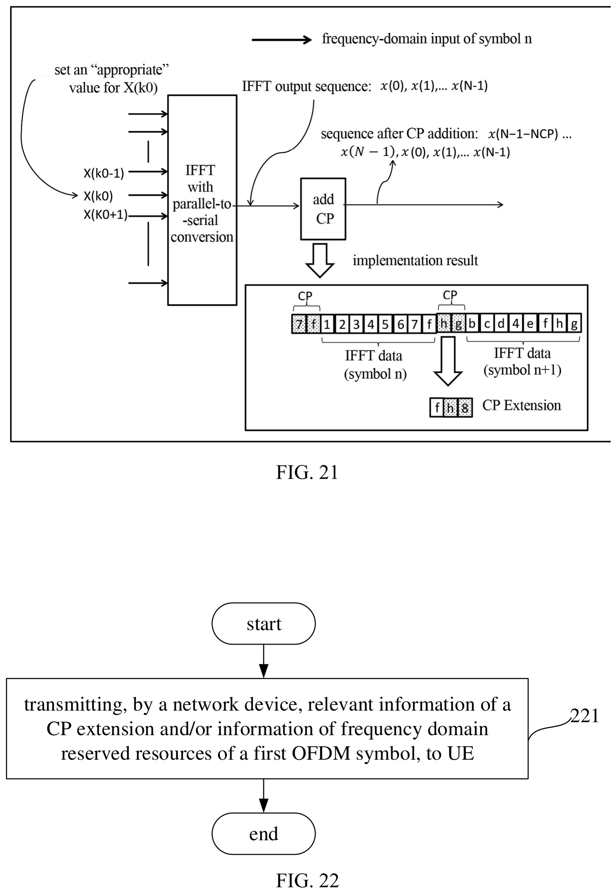

In this embodiment, for the to-be-transmitted n-th OFDM symbol, the "appropriate" positions and "appropriate" values of M1 RE resources are selected from N REs of the input IFFT, thereby achieving the effect of extending the CP length by M samples for the (n+1)-th OFDM symbol, and its implementation effect is shown in FIG. 21. In FIG. 21, assuming that the CP needs to be extended by 1 FFT sample point for the symbol n+1, then for the symbol n, the RE resource at a specific k0 position is set with data of an "appropriate" value, thereby achieving the effect of extending the CP length from 2 FFT samples to 3 FFT samples for the (n+1)-th OFDM symbols.

Assuming k0 is 0, in order to achieve the effect of extending the CP to 3 FFT samples for the (n+1)-th OFDM symbols, i.e., the CP data is "f h g", it is necessary to ensure that the last data of time domain data of the symbol n is "f", which corresponds to a value of the third last data of IFFT output of the symbol n. That is, X(k0-0) needs to be set to an "appropriate" value so that the (N-1)-th value in the time domain values of the symbol n is "f".

Assuming k0 is 0, the value of X(k0) can be determined by using the following method.

Assuming the length of FFT is N, an "appropriate" value of the last data is "1", which can be expressed as: x(N - 1) = "f".

From the IDFT formula, it is known that:

$$x(N-1) = \text{"f"} = \frac{1}{N}\sum_{k=0}^{k=N-1} X(k)W_N^{-k*(N-1)}, n = 0,1,\dots N-1$$

Thus, $N * \text{"f"} = X(0) + \sum_{k=1}^{k=N-1} X(k)W_N^{-k*(N-2)}, n = 0,1,\dots N-1$.

That is, $X(0) = N * \text{"f"} - \sum_{k=1}^{k=N-1} X(k)W_N^{-k*(N-2)}, n = 0,1,\dots N-1$.

From the above method for calculating values of X(k0), it can be known that different k0 values correspond to different X(k0) values. Considering that the reserved resources are not used to transmit any information, the smaller the X(k0) value, the smaller the power occupied by the RE resources. Therefore, the best practice is to traverse all k0 values so that the corresponding X(k0) value is the smallest, or X(k0) is less than a certain threshold.

In the embodiment of the present disclosure, the UE receives relevant information of CP extension transmitted by the network device, so that the target OFDM symbol that requires CP extension and the CP extension increment can be determined. According to the CP extension increment, the UE can adjust the starting position for receiving the target OFDM symbol. By adjusting the starting position for receiving the target OFDM symbol, the effect of CP extension can be achieved without changing the physical layer frame structure. The UE can determine unavailable positions in the data transmission based on the information of the frequency domain reserved resources of symbols adjacent to the target OFDM symbol transmitted by the network device, thereby improving data reception efficiency. The UE can also obtain a to-be-transmitted uplink OFDM symbol based on the information of the frequency domain reserved resources, thereby achieving the effect of CP extension without changing the physical layer frame structure (the method of obtaining the to-be-transmitted uplink OFDM symbol is the same as the method for the network device to generate the to-be-transmitted OFDM symbol, which will not be repeated here). This solution achieves the effect of CP extension without changing the physical layer frame structure, resulting in lower device implementation costs, compatibility with legacy UE services, and conservation of air interface resources.

As shown in FIG. 22, one embodiment of the present disclosure further provides a cyclic prefix extension device, which is applied to a network device and includes:
Step 221: transmitting, by the network device, relevant information of a CP extension and/or information of frequency domain reserved resources of a first OFDM symbol, to a user equipment (UE).

The relevant information of the CP extension is used to indicate a target OFDM symbol using the extended CP and a CP extension increment; the first OFDM symbol is adjacent to the target OFDM symbol.

In this embodiment, the network device can determine the CP extension increment M based on the service transmission quality requirements and the deployed station spacing information. The cp extension increment M is relative to the CP length before extension, and its unit can be microseconds (or milliseconds), sampling points, or a time unit of IFFT sample point.

The network device may transmit the relevant information of the CP extension to the UE, indicating the target OFDM symbol that requires CP extension and the CP extension increment. There may be one or more target OFDM symbols, and the CP extension increment refers to an increment relative to a CP length before extension. The UE adjusts a starting position for receiving the target OFDM symbol according to the relevant information of the CP extension, thereby achieving the purpose of extending the CP for the target OFDM symbol.

The network device can also determine M1 frequency domain reserved resources of the first OFDM symbol and values of the frequency domain reserved resources. By taking the first OFDM symbol being an adjacent symbol following the target OFDM symbol that requires CP extension as an example, by setting the values of the frequency domain reserved resources, after performing IFFT, time domain values of M specific positions in the OFDM symbol n+1 can be equal to the first M time domain values of the OFDM symbol n.

It is assumed that the symbol n is an OFDM symbol that requires CP extension. For the symbol n+1, if after performing IFFT, values of M specific time domain positions in the OFDM symbol n+1 are equal to the first M time domain values of the OFDM symbol n, which is equivalent to performing CP extension on the symbol n+1.

The network device may also transmit to the UE information of reserved resources of an adjacent symbol (i.e., the first OFDM symbol) of the target OFDM symbol that requires CP extension. The reserved resources are reserved resources before the first OFDM symbol is transformed, and the reserved resources refer to frequency domain resources. The information of the reserved resources may include: positions of the reserved resources and values of the positions. Before performing the transformation, the network device can implement CP extension for the target OFDM symbol by setting the value of the reserved resources.

In the embodiments of the present disclosure, the network device indicates the relevant information of the CP extension to the UE, so that the UE can determine the target OFDM symbol that requires CP extension and the CP extension increment. The network device can indicate to the UE, information of frequency domain reserved resources for an adjacent symbol of the target OFDM symbol, so that the UE can determine the unavailable position in the data transmission, thereby improving the data reception efficiency. The UE can also obtain the to-be-transmitted uplink OFDM symbol based on the information of the frequency domain reserved resources, thereby achieving the effect of CP extension without changing the physical layer frame structure. This solution achieves the effect of CP extension without changing the physical layer frame structure, resulting in lower device implementation costs, compatibility with legacy UE services, and conservation of air interface resources.

It is to be noted that in the downlink data symbol transmission process described in this technical solution, the UE is the receiving end of the data symbol, and the network device is the transmitting end of the data symbol. The relevant technology can also be applied to the uplink data transmission process, in which the UE is the transmitting end, the network device is the receiving end, and the information configuration and indication are performed by the network device. That is, for transmission of uplink data, it is still the network device that transmits, to the UE, the relevant information of the CP extension, and/or the information of the frequency domain reserved resources of the first OFDM symbol. The UE performs a data transmission process based on the received information, and the data transmission process may include: data mapping, transform, adding CP, transmitting symbols and other processes. The network device receives uplink data transmitted by the UE.

In some embodiments, the relevant information of the CP extension includes at least one of the following:

1) information indicating the target OFDM symbol using the extended CP; this information may indicate which one or more symbols that require CP extension;

2) CP extension increment: the CP extension increment refers to an increment relative to a CP length before extension, and its unit can be microseconds (or milliseconds), or sampling points or a time unit of IFFT sample points;

In some embodiments, the relevant information of the CP extension can be determined by, but is not limited to, the following methods: determining a CP extension increment, where the CP extension increment is an increment relative to the quantity of normal CPs; and determining the relevant information of the CP extension according to the CP extension increment. The network device can determine the CP extension increment based on the service transmission quality requirements and the spacing information of the deployed network devices, thereby generating the relevant information of the CP extension.

3) length of the extended CP: the network device may also directly indicate the length of the extended CP, and a CP extension amount may be obtained by calculation.

In this embodiment, the network device can directly indicate a value of the extension increment, or can indicate a length of an extended CP. If the length of the extended CP is indicated, the UE can determine an extension increment according to a CP length of a current symbol and the CP length after extension.

As an optional embodiment, the transmitting the relevant information of the CP extension and/or the information of frequency domain reserved resources of the first OFDM symbol to the UE, includes:

transmitting a high-layer signaling and/or a scheduling signaling to the UE, where the high-layer signaling and/or the scheduling signaling carries the relevant information of the CP extension and/or the information of frequency domain reserved resources of the first OFDM symbol.

In this embodiment, the network device transmits the relevant information of the CP extension and/or the frequency domain reserved resource information of the first OFDM symbol to the UE through high layer signaling and/or scheduling signaling. The scheduling signaling may be dynamic scheduling signaling. For example, the CP extension amount may be indicated by high layer information or by dynamic scheduling signaling, and an indicated value may be an extension increment M or the length of the extended CP.

For example, the network device configures one or more OFDM symbols of extended CP through high layer signaling, and the OFDM symbols that requires CP extension may be: all downlink symbols (slots) or a part of downlink symbols (slots) on a serving cell. Alternatively, the network device indicates one or more OFDM symbols that require CP extension, through scheduling signaling, and the OFDM symbols that require CP extension may be: all symbols or part of scheduled symbols.

As an optional embodiment, the method further includes:

mapping to-be-transmitted data to frequency domain of the to-be-transmitted OFDM symbol;

for the first OFDM symbol, determining a position of the frequency domain reserved resource and a value of the frequency domain reserved resource;

performing transformation to generate a to-be-transmitted OFDM symbol;

adding CPs to the OFDM symbol according to a quantity of normal CPs;

transmitting the OFDM symbol to the UE.

In this embodiment, the network device maps the to-be-transmitted data to the corresponding frequency domain position, and determines the position and value of the OFDM reserved resources of the first OFDM symbol. IFFT transformation is performed to generate a to-be-transmitted symbol in the time domain. The network device transmits the OFDM symbol to the UE after processes such as CP addition. It is to be noted that this step is for the downlink data transmission process, in which the network device, as the data transmitter, needs to perform the above transformation, adding CP and transmitting symbols and other steps. For uplink data transmission, the network device needs to adjust the starting position for receiving target OFDM symbol based on the CP extension increment, and adjust the starting position for receiving the target OFDM symbol to be delayed by M time-domain positions relative to an original reception position before CP expansion.

In some embodiments, the frequency domain reserved resources of the first OFDM symbol are not used for downlink transmission or uplink transmission.

In this embodiment, the downlink transmission includes but is not limited to: transmission of physical downlink shared channel (PDSCH), physical downlink control channel (PDCCH), channel state information reference signal (CSI-RS) or demodulation reference signal (DMRS). The network device can transmit to the UE, the relevant information of reserved resources before the first OFDM symbol is transformed. The UE receives the information and can determine positions and values of M1 frequency domain reserved resources. The information can be high layer signaling configuration or dynamic scheduling signaling transmitted by the network device. It is to be noted that for uplink transmission, the reserved resources before the first OFDM symbol is transformed are not used for uplink transmission.

As an optional embodiment, the first OFDM symbol is an adjacent symbol following the time domain position of the target OFDM symbol, and the values of the M first time domain positions of the first OFDM symbol are the same as the values of the first M time domain positions of the target OFDM symbol;

or,

the first OFDM symbol is an adjacent symbol before the time domain position of the target OFDM symbol, and the values of the last M time domain positions of the first OFDM symbol are the same as the values of the M second time domain positions of the target OFDM symbol;
where M is the CP expansion increment.

In this embodiment, the first OFDM symbol may be an adjacent symbol before the target OFDM symbol that requires CP extension, or may be an adjacent symbol after the target OFDM symbol. If the first OFDM symbol is an adjacent symbol before the target OFDM symbol, for example, the target OFDM symbol is the symbol n, and the first OFDM symbol is the symbol n+1, the network device sets the positions and values of the M1 OFDM reserved resources of the symbol n+1 so that after performing IFFT, the time domain values of the M specific positions (i.e., the first time domain positions) in the OFDM symbol n+1 are equal to the first M time domain values of the OFDM symbol n.

In some embodiments, the M first time domain positions include one of the following:

(1) the first M time domain positions of the first OFDM symbol after adding CP according to the quantity of normal CP.

For example, for the OFDM symbol n, the first M sequence values in a sequence formed after IFFT transformation are Y0.

For the OFDM symbol n+1, the first M sequence values in a sequence formed after IFFT transformation and CP addition are Y1.

The above Y0 is equal to Y1.

(2) When M is less than or equal to A, the M first time domain positions include: a time domain position of first data and subsequent M-1 time domain positions, and the first data is data whose sequence number is a difference between a total length of the data sequence and A; where A is the number of sample points of normal CP (which may be the length or number of the normal CP).

(3) when M is greater than A, the first to A-th time domain positions in M include: a time domain position of first data and subsequent A-1 time domain positions, the first data is data whose sequence number is a difference between a total length of the data sequence and A; the (A+1)-th to M-th time domain positions in M are: first (M-A) time domain positions; where A is the number of sample points of normal CP (which may be the length or number of the normal CP).

The above (2) and (3) refers to the description mode 2: description based on relationship between M and the quantity of CP sample points A before expansion.

For example, for the OFDM symbol n, assuming a frequency domain data length is N, after IDFT transformation, an OFDM data sequence $x_0, x_1, ... x_{N-2}, x_{N-1}$ is formed. The first M time domain values are: $v_0, v_1, v_2, ... v_{M-1}$.

For the OFDM symbol n+1, assuming a frequency domain data length is $N_u^\mu = N$, after IDFT transformation, a data OFDM data sequence $x_0, x_1, ... x_{N-2}, x_{N-1}$ is formed.

When $M \leq N_{CP}^\mu$, the following values need to meet the conditions:

$$x_{N-N_{CP}^\mu} = v0, \quad x_{N-N_{CP}^\mu+1} = v1, \quad x_{N-N_{CP}^\mu+2} = v2, \quad ...x_{N-N_{CP}^\mu+M-1} = v_{M-1}.$$

When $M > N_{CP}^\mu$:

from m = 0 to $m = N_{CP}^\mu - 1$ m is any value between 0 and M, the following values need to satisfy the conditions:

$$x_{N-N_{CP}^\mu} = v0, \quad x_{N-N_{CP}^\mu+1} = v1, \quad x_{N-N_{CP}^\mu+2} = v2, \quad ...x_{N-1} = v_{N_{CP}^\mu-1};$$

from $m = N_{CP}^\mu$ to M - 1, the following values need to satisfy the conditions:

$$x_0 = v_{N_{CP}^\mu}, \quad x_1 = v_{N_{CP}^\mu+1}, \quad x_2 = v_{N_{CP}^\mu+2}, \quad ...x_{M-N_{CP}^\mu} = v_{M-1}.$$

$N_{CP}^\mu$ represents the number of IFFT samples before CP expansion.

The relationship between IFFT time-domain output samples of the OFDM symbol n+1 and the OFDM symbol n is shown in FIG. 4. Specifically, after transformation, M time-domain values of the symbol n+1 are equal to the first M time-domain values of the symbol n.

In some embodiments, if the first OFDM symbol is an adjacent symbol following the target OFDM symbol, for example, the target OFDM symbol is the symbol n+1, and the first OFDM symbol is symbol n, the network device sets the positions and values of the M1 frequency domain reserved resources of the symbol n so that after performing IFFT, the values of the last M time domain positions in the OFDM symbol n are equal to the values of the M specific time domain positions (i.e., the second time domain positions) of the OFDM symbol n+1.

In some embodiments, the M second time domain positions include: a difference between a total length of the data sequence and a total length of the extended CP, and time domain positions of subsequent M-1 data.

For example, for the symbol n+1, an expected CP length after extension is NECP=512, the CP length before extension is NCP=144, then the CP extension increment M=368.

Assuming that the frequency domain data length is N=2048, after IDFT transformation, a data OFDM data sequence $x_0, x_1, ... x_{N-2}, x_{N-1}$ is formed; within the last M values of this sequence, the first value is: $x_{N-NECP} = x_{1536}$; then, the M=368 specific time domains $x_{1536}, x_{1537}, ...x_{1903}$ in the symbol n+1 correspond to the values $v_0, v_1, ... v_{M-1}$ respectively.

For the symbol n:

assuming that the frequency domain data length is $N_u^\mu=N=2048$, after IDFT transformation, a data OFDM data sequence $x_0, x_1, ... x_{N-2}, x_{N-1}$ is formed;

the last M=368 data are $x_{N-1-M+1}, x_{N-1-M+2}, ... x_{N-1}$, which are corresponding to the values $v_0, v_1, ... v_{M-1}$ respectively;

where $N_{CP}^\mu$ represents the number of IFFT samples before CP extension.

The relationship between the IFFT time domain output samples of the OFDM symbol n+1 and the OFDM symbol n is shown in FIG. 16.

This embodiment can achieve the effect of CP extension without changing the frame structure (that is, there is no need to modify one slot from containing 14 symbols to containing 12 symbols).

As an optional embodiment, the value of the frequency domain reserved resource may be determined by, but is not limited to, the following method:

> selecting M1 frequency domain reserved resource positions from the N frequency domain positions, where M1 is greater than or equal to 0;
> according to M known data and the transformation formula, determining one or more sets of numerical solutions, where each set of numerical solutions corresponds to a resource position combination;
> if there is one set of numerical solutions, determining the set of numerical solutions as the values of the frequency domain reserved resources; if there are multiple sets of the numerical solutions, determining one sets of numerical solutions that meets the first condition in the multiple sets of numerical solutions as the values of the frequency domain reserved resources;
> where M is the CP extension increment, and the M known data are values of M time domain positions, shared between the first OFDM symbol and the target OFDM symbol.

In some embodiments, the first condition includes at least one of the following:

> moduli of all values in a set of numerical solutions are smaller than a first threshold;
> an average value of moduli of all numerical values in a set of numerical solutions is less than a second threshold.

In this embodiment, by taking the case where the first OFDM symbol is the symbol n+1 and the target OFDM symbol is the symbol n as an example, the method for the network device to determine the positions of M1 frequency domain reserved resources and the values of the frequency domain reserved resources is as follows:

> assuming that M1 takes the value M, and the input frequency domain data is X(n), n=0,1,···N-1;
> where there are M1 frequency domain data $\{X(k0),X(k1),...X(kM1-1)\}$ that do not transmit any information, that is, any value can be set to meet the same requirement as the above M data sequences. Here $k_0$, $k_1$,...$k_{M1-1}$ are integers greater than or equal to 0 and less than or equal to N-1 and are not repeated. The number of combinations of $k_0$, $k_1$,...
> $k_{M1-1}$ is: $K = C_{M1-1}^N = \dfrac{N!}{M1!*(N-M1)!}$, that is, combinations of selecting M1 elements from N elements.

The other frequency domains are used to transmit data (i.e., the other frequency domain data are fixed values and cannot be changed). That is, the transmitting end sets appropriate M data $\{X(k_0), X(k_1), ... X(k_{M-1})\}$.

According to the following IDFT formula:

$$x(n) = \frac{1}{N} \sum_{k=0}^{k=N-1} X(k)W_N^{-k*n}, n = 0,1,...N-1$$

M linear equations with M1 variables can be listed. That is, by solving the M linear equations with M1 variables, at least one set of "numerical solutions" can be obtained.

Further, since the number of combinations of $k_0$, $k_1$,...$k_{M1-1}$ is K, that is, at least K sets of "numerical solutions" can be obtained.

One set of "appropriate" values is found from the K sets of "numerical solutions", that is, determining the "appropriate" positions and "appropriate" values.

A solution that satisfies an "appropriate" value can be defined as one that satisfies at least one of the following conditions:

> 1) modulus of all M1 values is less than a threshold;
> 2) an average value of moduli of M1 values is less than a threshold.

It is to be noted that when solving a M1-variable linear equation, a "numerical solution" may not be the numerical value of the solution to the equation in the mathematical sense. When an error between two numerical values is within a certain range, it can be considered as the solution to the equation.

In addition to being greater than or equal to M, the value of M1 can also be less than M. Considering randomness of input data of the OFDM symbol n+1, there may be other situations where the number of reserved resources is less than M (such as M1=0, M1=M/2), and the above equation relationship is satisfied.

On the M1 frequency domain reserved resources, the data can be transmitted in a rate matching manner (i.e.,

bypassing these resources when mapping data) or in a puncturing manner (i.e., data can be mapped to the frequency domain reserved resources, and the receiving end considers that it is punctured).

Among the combinations of M1 frequency domain reserved resources, the combinations occupying important frequency domain positions are discarded, for example, original RE positions are used to transmit PDCCH or DMRS.

It is to be noted that when the first OFDM symbol is the symbol n and the target OFDM symbol is the symbol n+1, the method for the network device to determine the positions of M1 frequency domain reserved resources and the values of the frequency domain reserved resources is similar to the above method and will not be described in detail here. It is to be noted that in the case where the first OFDM symbol is an adjacent symbol before the target OFDM symbol for CP extension, the network device does not need to indicate the information of the CP extension increment M to the UE, and the UE does not need to calculate the value; but the transmitting end needs to perform symbol reverse processing, such as processing the symbol n+1 first and then the symbol n. Considering that common signaling needs to maintain compatibility with legacy UE versions, this method can be applied to transmission of common signaling, thereby improving reception performance of common signaling. For example, this method can be used to transmit synchronization signal blocks (SSB) and SIB1 information.

It is to be noted that M1 is only related to the FFT size and the CP extension amount, and has nothing to do with the actual number of occupied PRBs. In theory, M1 RE resource positions can be any positions. If optimized, the value of M1 can be less than M, or greater than or equal to M. The implementation effect is shown in FIG. 15. Assuming that for the symbol n-1, the CP needs to be extended by 1 FFT sample point, then the RE resource at the specific k0 position of symbol n is set with data of an "appropriate" value, so that the effect of extending CP of the symbol n-1 from 2 FFT samples to 3 FFT samples can be achieved.

In some embodiments, the distribution of the M1 frequency domain reserved resources includes at least one of the following situations:

the M1 frequency-domain reserved resources are distributed within a transmissible bandwidth;
the M1 frequency-domain reserved resources are distributed within a guard band, and a signal power of these M1 resources is less than a third threshold; the third threshold can be set based on the data transmission requirements of the network device;
the M1 frequency-domain reserved resources are distributed outside the bandwidth, and a signal power of these M1 resources is less than a fourth threshold; the fourth threshold can be set based on the data transmission requirements of the network device.

In this embodiment, the M1 frequency domain reserved resources in the first OFDM symbol may be distributed in the transmittable bandwidth, in the guard bandwidth, or outside the bandwidth. In addition to traversing all positions, other methods may be used to optimize the method for determining the M1 "appropriate" frequency domain reserved resources and the "appropriate" values of the frequency domain reserved resources. One specific optimization method is as follows.

Step 61: preferentially placing M1 frequency domain reserved resources on guard bandwidth and out-of-band RE resources.

In this embodiment, the M1 frequency domain reserved resources are preferentially placed on the guard bandwidth and out-of-band RE resources. The power corresponding to the set data value does not exceed a threshold range specified by the standard protocol.

Step 62: determining positions of the frequency domain reserved resources on the communication frequency.

Through the step 62, a part or all of the M1 frequency domain reserved resources are preferentially determined. If the above extended CP function can be achieved through the step 62, there is no need to set the frequency domain reserved resources on the communication frequency. That is, there is no need to indicate information of frequency domain reserved resources to the UE.

The guard bandwidth in the above embodiment is used to avoid frequency domain interference of adjacent channels in a granted spectrum. Usually, the transmitting end needs to reserve some frequency domain RE resources, and the power of these frequency domain reserved resources needs to be strictly limited, that is, the power cannot exceed a certain threshold. Usually, the network device does not send any data information on these frequency domain reserved resources.

For out-of-band leakage limit: when a transmitter transmits a signal, due to limitations of hardware components, the relevant signal is transmitted not only in the communication channel, but also leak out of the communication bandwidth. The power of this leaked signal cannot exceed a certain threshold.

It is to be noted that the network device in the embodiment of the present disclosure can implement all the steps and technical effects implemented by the network device in the above method embodiment applied to the UE, and the same parts will not be repeated here.

In one embodiment of the present disclosure, for the to-be-transmitted n-th OFDM symbol, "appropriate" positions and "appropriate" values of M1 RE resources are selected on N REs input to the IFFT, thereby achieving the effect of extending the CP length by M samples for the (n-1)-th OFDM symbol.

It is to be noted that the above embodiment is described with the UE as the data receiving end and the network device as the data transmitting end. In practical applications, the above CP extension method is also applicable to uplink data transmission, that is, the UE is used as a data transmission end and the network device is used as a data receiving end. The uplink data transmission process is similar to the downlink data transmission process in the above embodiment, and the relevant information of the CP extension and/or the information of the frequency domain reserved resources of the first OFDM symbol are all configured by the network device, only execution ends of the data transmission are varied, and similar contents are not repeated here.

In the embodiments of the present disclosure, the network device indicates to the UE the relevant information of the CP extension, so that the UE can determine the target OFDM symbol that requires CP extension and the CP extension increment. The network device can indicate to the UE the information of the frequency domain reserved resources for the adjacent symbols of the target OFDM symbol before the transformation is performed, so that the UE can determine the unavailable position in the data transmission, thereby improving the data reception efficiency. The UE can also obtain a to-be-transmitted uplink OFDM symbol based on the information of the frequency domain reserved resources, thereby achieving the effect of CP extension without changing the physical layer frame structure. This solution achieves the effect of CP extension without changing the physical layer frame structure, resulting in lower device implementation costs, compatibility with legacy UE services, and conservation of air interface resources.

The above embodiments introduce the cyclic prefix extension method in the present disclosure. The following embodiments will further illustrate the corresponding device in conjunction with the accompanying drawings.

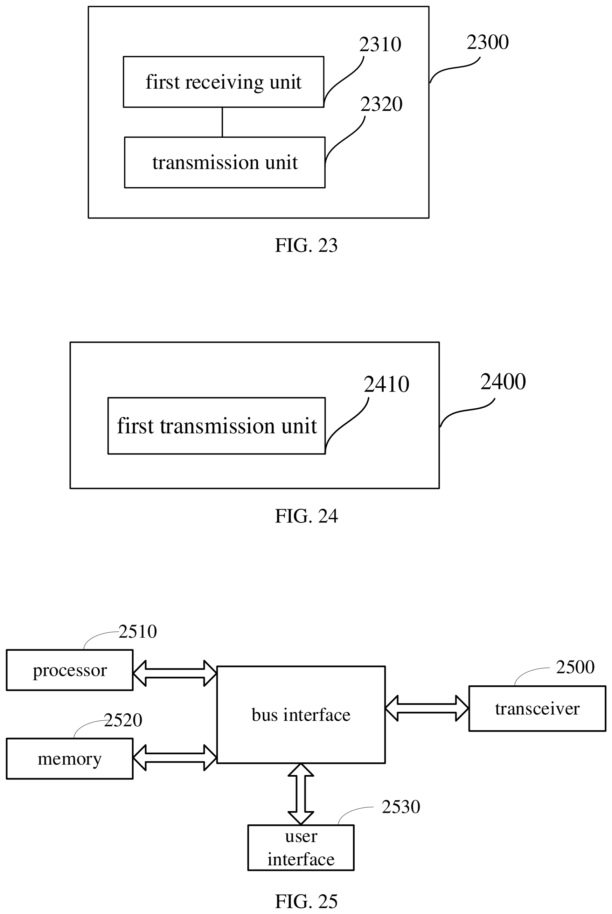

Specifically, as shown in FIG. 23, one embodiment of the present disclosure provides a cyclic prefix extension device 2300, which is applied to a UE and includes:

a first receiving unit 2310 used to receive relevant information of a CP extension and/or information of frequency domain reserved resources of a first OFDM symbol, transmitted by a network device; where the relevant information of the CP extension is used to indicate a target OFDM symbol using the extended CP and a CP extension increment; the first OFDM symbol is adjacent to the target OFDM symbol;
a transmission unit 2320 used to perform data transmission according to the relevant information of the CP extension and/or the information of the frequency domain reserved resources of the first OFDM symbol.

In some embodiments, the relevant information of the CP extension includes at least one of the following:

information indicating the target OFDM symbol using the extended CP;
CP extension increment.

In some embodiments, the first receiving unit is specifically used to:
receive a high layer signaling and/or a scheduling signaling transmitted by a network device, where the high layer signaling and/or the scheduling signaling carries the relevant information of the CP extension and/or the information of frequency domain reserved resources of the first OFDM symbol.

In some embodiments, the transmission unit is specifically used to:
according to the information of the frequency domain reserved resources of the first OFDM symbol, determine that the reserved resources are not used for downlink transmission or uplink transmission.

In some embodiments, the transmission unit is specifically used to:
adjust a starting position for receiving the target OFDM symbol according to the CP extension increment.

In some embodiments, the starting position for receiving the target OFDM symbol is: a position obtained by shifting a reception starting position determined according to a normal CP backward by M time-domain positions, where M is the CP extension increment.

It is to be noted here that the above device provided in the embodiment of the present disclosure can implement all the method steps implemented in the above method embodiment applied to the UE, and can achieve the same technical effect. The parts and beneficial effects of this embodiment that are the same as the method embodiment will not be described in detail here.

Specifically, as shown in FIG. 24, one embodiment of the present disclosure provides a cyclic prefix extension device 2400, which is applied to a network device, including:
a first transmission unit 2410 used to transmit relevant information of a CP extension and/or information of frequency domain reserved resources of a first OFDM symbol, to a user equipment (UE).

The relevant information of the CP extension is used to indicate a target OFDM symbol using the extended CP and a CP extension increment; the first OFDM symbol is adjacent to the target OFDM symbol.

In some embodiments, the relevant information of the CP extension includes at least one of the following:

information indicating the target OFDM symbol using the extended CP;
CP extension increment;
length of the extended CP.

In some embodiments, the first transmission unit is specifically used to:
transmit a high-layer signaling and/or a scheduling signaling to the UE, where the high-layer signaling and/or the scheduling signaling carries the relevant information of the CP extension and/or the information of frequency domain reserved resources of the first OFDM symbol.

In some embodiments, the device further includes:

a mapping unit used to map to-be-transmitted data to frequency domain of the to-be-transmitted OFDM symbol;
a second determining unit used to, for the first OFDM symbol, determine a position of the frequency domain reserved resource and a value of the frequency domain reserved resource;
a transform unit used to perform transformation to generate a to-be-transmitted OFDM symbol;
a symbol adding unit used to add CPs to the OFDM symbol according to a quantity of normal CPs;
a second transmission unit used to transmit the OFDM symbol to the UE.

In some embodiments, the first OFDM symbol is an adjacent symbol following the time domain position of the target OFDM symbol, and the values of the M first time domain positions of the first OFDM symbol are the same as the values of the first M time domain positions of the target OFDM symbol;
or,

the first OFDM symbol is an adjacent symbol before the time domain position of the target OFDM symbol, and the values of the last M time domain positions of the first OFDM symbol are the same as the values of the M second time domain positions of the target OFDM symbol;
where M is the CP expansion increment.

In some embodiments, the M first time domain positions include one of the following:

the first M time domain positions of the first OFDM symbol after adding CP according to the quantity of normal CP.
when M is less than or equal to A, the M first time domain positions include: a time domain position of first data and subsequent M-1 time domain positions, and the first data is data whose sequence number is a difference between a total length of the data sequence and A;
when M is greater than A, the first to A-th time domain positions in M include: a time domain position of first data and subsequent A-1 time domain positions, the first data is data whose sequence number is a difference between a total length of the data sequence and A; the (A+1)-th to M-th time domain positions in M are: first (M-A) time domain positions;
where A is the number of sample points of normal CP.

In some embodiments, the M second time domain positions include:
a difference between a total length of the data sequence and a total length of the extended CP, and time domain positions of subsequent M-1 data.

In some embodiments, the device further includes: a processing unit specifically used to:

select M1 frequency domain reserved resource positions from the N frequency domain positions, where M1 is greater than or equal to 0;
according to M known data and the transformation formula, determine one or more sets of numerical solutions, where each set of numerical solutions corresponds to a resource position combination;
if there is one set of numerical solutions, determine the set of numerical solutions as the values of the frequency domain reserved resources; if there are multiple sets of the numerical solutions, determine one sets of numerical solutions that meets the first condition in the multiple sets of numerical solutions as the values of the frequency domain reserved resources;
where M is the CP extension increment, and the M known data are values of M time domain positions, shared between the first OFDM symbol and the target OFDM symbol.

In some embodiments, the first condition includes at least one of the following:

moduli of all values in a set of numerical solutions are smaller than a first threshold;

an average value of moduli of all numerical values in a set of numerical solutions is less than a second threshold.

In some embodiments, the distribution of the M1 frequency domain reserved resources includes at least one of the following situations:

the M1 frequency-domain reserved resources are distributed within a transmissible bandwidth;
the M1 frequency-domain reserved resources are distributed within a guard band, and a signal power of these M1 resources is less than a third threshold;
the M1 frequency-domain reserved resources are distributed outside the bandwidth, and a signal power of these M1 resources is less than a fourth threshold.

In some embodiments, the device further includes:

a third determining unit used to determine a CP extension increment; where the CP extension increment is an increment relative to the quantity of normal CPs;
a fourth determining unit used to determine relevant information of the CP extension according to the CP extension increment.

In some embodiments, the frequency domain reserved resources of the first OFDM symbol are not used for downlink transmission or uplink transmission.

It is to be noted here that the above device provided by the embodiment of the present disclosure can implement all the method steps implemented by the above method embodiment applied to the network side device, and can achieve the same technical effect. The parts and beneficial effects of this embodiment that are the same as the method embodiment will not be described in detail here.

It is to be noted that division of units in the embodiment of the present disclosure is exemplary, and is only a logical function division, and there may be another division manner in actual implementation. In addition, various functional units in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

As shown in FIG. 25, one embodiment of the present disclosure further provides a user equipment (UE), including: a memory 2520, a transceiver 2500, and a processor 2510. The memory 2520 is used to store a computer program; the transceiver 2500 is used to receive and send data under the control of the processor 2510; the processor 2510 is used to read the computer program in the memory and perform the following operations:

receiving relevant information of a CP extension and/or information of frequency domain reserved resources of a first OFDM symbol, transmitted by a network device; where the relevant information of the CP extension is used to indicate a target OFDM symbol using the extended CP and a CP extension increment; the first OFDM symbol is adjacent to the target OFDM symbol;
performing data transmission according to the relevant information of the CP extension and/or the information of the frequency domain reserved resources of the first OFDM symbol.

In some embodiments, the relevant information of the CP extension includes at least one of the following:

information indicating the target OFDM symbol using the extended CP;
CP extension increment;
length of extended CP.

In some embodiments, the processor is used to read the computer program in the memory and perform the following operations:
receiving a high layer signaling and/or a scheduling signaling transmitted by a network device, where the high layer signaling and/or the scheduling signaling carries the relevant information of the CP extension and/or the information of frequency domain reserved resources of the first OFDM symbol.

In some embodiments, the processor is used to read the computer program in the memory and perform the following operations:

according to the information of the frequency domain reserved resources of the first OFDM symbol, determining that the reserved resources are not used for downlink transmission or uplink transmission.

In some embodiments, the processor is used to read the computer program in the memory and perform the following operations:

adjusting a starting position for receiving the target OFDM symbol according to the CP extension increment.

In some embodiments, the starting position for receiving the target OFDM symbol is: a position obtained by shifting a reception starting position determined according to a normal CP backward by M time-domain positions, where M is the CP extension increment.

In FIG. 25, a bus architecture may include any number of interconnected bus and bridge. Specifically, various circuits of one or more processors, which are represented by the processor 2510, and one or more memories, which are represented by the memory 2520, are linked together. The bus architecture may link various other circuits, such as a peripheral device, voltage regulator and a power management circuit together. These features are well known in this field; therefore, the present disclosure does not make further description on these features. The bus interface provides an interface. The transceiver 2500 may be multiple elements, including a transmitter and a receiver and provide units, which communicate with other devices on the transmission medium. For different UEs, a user interface 2530 may be an interface that can be connected to external or internal devices. The connected devices include but are not limited to a small keyboard, a display, a speaker, a microphone, a joystick, etc.

The processor 2510 is responsible for managing the bus architecture and the normal processing. The memory 2520 may be used to store data used by the processor 2510 for performing operations.

In some embodiments, the processor 2510 may be a central processing unit (CPU), an application specific integrated circuit (ASIC), a field-programmable gate array (FPGA) or a complex programmable logic device (CPLD). The processor may also adopt multi-core architecture.

The processor calls the computer program stored in the memory to execute any method provided in the embodiment of the present disclosure according to obtained executable instructions. The processor and the memory may also be arranged physically separately.

It is to be noted here that the above UE provided in the embodiment of the present disclosure can implement all the method steps implemented by the above method embodiment applied to the UE, and can achieve the same technical effect. The parts and beneficial effects that are the same as the method embodiment in this embodiment will not be described in detail here.

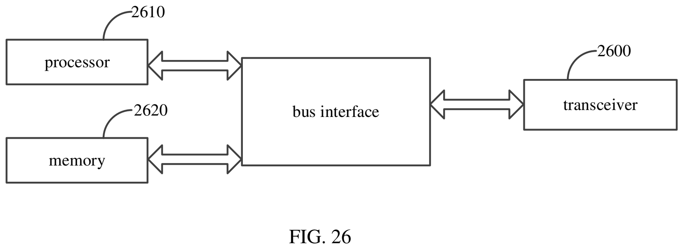

As shown in FIG. 26, one embodiment of the present disclosure further provides a network device, including: a memory 2620, a transceiver 2600, and a processor 2610. The memory 2620 is used to store a computer program; the transceiver 2600 is used to receive and send data under the control of the processor 2610; the processor 2610 is used to read the computer program in the memory and perform the following operations:

transmitting relevant information of a CP extension and/or information of frequency domain reserved resources of a first OFDM symbol, to a user equipment (UE).

The relevant information of the CP extension is used to indicate a target OFDM symbol using the extended CP and a CP extension increment; the first OFDM symbol is adjacent to the target OFDM symbol.

In some embodiments, the relevant information of the CP extension includes at least one of the following:

information indicating the target OFDM symbol using the extended CP;
CP extension increment;
length of the extended CP.

In some embodiments, the processor is used to read the computer program in the memory and perform the following operations:

transmitting a high-layer signaling and/or a scheduling signaling to the UE, where the high-layer signaling and/or the scheduling signaling carries the relevant information of the CP extension and/or the information of frequency domain reserved resources of the first OFDM symbol.

In some embodiments, the processor is used to read the computer program in the memory and perform the following operations:

mapping to-be-transmitted data to frequency domain of the to-be-transmitted OFDM symbol;
for the first OFDM symbol, determining a position of the frequency domain reserved resource and a value of the frequency domain reserved resource;

performing transformation to generate a to-be-transmitted OFDM symbol;
adding CPs to the OFDM symbol according to a quantity of normal CPs;
transmitting the OFDM symbol to the UE.

In some embodiments, the first OFDM symbol is an adjacent symbol following the time domain position of the target OFDM symbol, and the values of the M first time domain positions of the first OFDM symbol are the same as the values of the first M time domain positions of the target OFDM symbol;
or,

the first OFDM symbol is an adjacent symbol before the time domain position of the target OFDM symbol, and the values of the last M time domain positions of the first OFDM symbol are the same as the values of the M second time domain positions of the target OFDM symbol;
where M is the CP expansion increment.

In some embodiments, the M first time domain positions include one of the following:

the first M time domain positions of the first OFDM symbol after adding CP according to the quantity of normal CP. when M is less than or equal to A, the M first time domain positions include: a time domain position of first data and subsequent M-1 time domain positions, and the first data is data whose sequence number is a difference between a total length of the data sequence and A;
when M is greater than A, the first to A-th time domain positions in M include: a time domain position of first data and subsequent A-1 time domain positions, the first data is data whose sequence number is a difference between a total length of the data sequence and A; the (A+1)-th to M-th time domain positions in M are: first (M-A) time domain positions;
where A is the number of sample points of normal CP.

In some embodiments, the M second time domain positions include:
a difference between a total length of the data sequence and a total length of the extended CP, and time domain positions of subsequent M-1 data.

In some embodiments, the processor is used to read the computer program in the memory and perform the following operations:

selecting M1 frequency domain reserved resource positions from the N frequency domain positions, where M1 is greater than or equal to 0;
according to M known data and the transformation formula, determining one or more sets of numerical solutions, where each set of numerical solutions corresponds to a resource position combination;
if there is one set of numerical solutions, determining the set of numerical solutions as the values of the frequency domain reserved resources; if there are multiple sets of the numerical solutions, determining one sets of numerical solutions that meets the first condition in the multiple sets of numerical solutions as the values of the frequency domain reserved resources;
where M is the CP extension increment, and the M known data are values of M time domain positions, shared between the first OFDM symbol and the target OFDM symbol.

In some embodiments, the first condition includes at least one of the following:

moduli of all values in a set of numerical solutions are smaller than a first threshold;
an average value of moduli of all numerical values in a set of numerical solutions is less than a second threshold.

In some embodiments, the distribution of the M1 frequency domain reserved resources includes at least one of the following situations:

the M1 frequency-domain reserved resources are distributed within a transmissible bandwidth;
the M1 frequency-domain reserved resources are distributed within a guard band, and a signal power of these M1 resources is less than a third threshold;
the M1 frequency-domain reserved resources are distributed outside the bandwidth, and a signal power of these M1 resources is less than a fourth threshold.

In some embodiments, the processor is used to read the computer program in the memory and perform the following operations:

determining a CP extension increment; where the CP extension increment is an increment relative to the quantity of normal CPs;

determining relevant information of the CP extension according to the CP extension increment.

In some embodiments, the frequency domain reserved resources of the first OFDM symbol are not used for downlink transmission or uplink transmission.

In FIG. 26, a bus architecture may include any number of interconnected bus and bridge. Specifically, various circuits of one or more processors, which are represented by the processor 2610, and one or more memories, which are represented by the memory 2620, are linked together. The bus architecture may link various other circuits, such as a peripheral device, voltage regulator and a power management circuit together. These features are well known in this field; therefore, the present disclosure does not make further description on these features. The bus interface provides an interface. The transceiver 2600 may be multiple elements, including a transmitter and a receiver and provide units, which communicate with other devices on the transmission medium. The processor 2610 is responsible for managing the bus architecture and the normal processing. The memory 2620 may be used to store data used by the processor 2610 for performing operations.

The processor 2610 may be a central processing unit (CPU), an application specific integrated circuit (ASIC), a field-programmable gate array (FPGA) or a complex programmable logic device (CPLD). The processor may also adopt multi-core architecture.

It is to be noted here that the above network device provided in the embodiment of the present disclosure can implement all the method steps implemented by the above method embodiment applied to the network side device, and can achieve the same technical effect. The parts and beneficial effects that are the same as the method embodiment in this embodiment will not be described in detail here.

In addition, one embodiment of the present disclosure further provides a processor-readable storage medium, which stores a computer program. When the program is executed by the processor, the steps of the cyclic prefix extension method applied to the UE as described above are implemented. The parts and beneficial effects of this embodiment that are the same as the method embodiment will not be described in detail here.

One embodiment of the present disclosure further provides a processor-readable storage medium, which stores a computer program. When the program is executed by the processor, the steps of the cyclic prefix extension method applied to the network device as described above are implemented. The parts and beneficial effects of this embodiment that are the same as the method embodiment will not be described in detail here.

The processor-readable storage medium can be any available medium or data storage device that can be accessed by the processor, including but not limited to magnetic storage (such as floppy disks, hard disks, magnetic tapes, magneto-optical disks (MO), etc.), optical storage (such as compact disks (CD), digital video disks (DVD), Blu-ray Discs (BD), high-definition versatile disks (HVD), etc.), and semiconductor memory (such as read-only memory (ROM), erasable programmable read-only memory (EPROM), electrically erasable programmable read-only memory (EEPROM), non-volatile memory (NAND FLASH), solid-state disk (Solid State Disk or Solid State Drive, SSD)), etc.

It is to be noted that the technical solution of the embodiment of the present disclosure may be applied to various systems, especially a 5G system. For example, applicable systems may be Global System of Mobile communication (GSM) system, Code Division Multiple Access (CDMA) system, Wideband Code Division Multiple Access (WCDMA) system, General Packet Radio Service (GPRS) system, Long Term Evolution (LTE) system, LTE frequency division duplex (FDD), LTE time division duplex (TDD) system, long term evolution advanced (LTE-A) system, universal mobile telecommunication system (UMTS), worldwide interoperability for microwave access (WiMAX) system, or 5th-Generation (5G) New Radio (NR) system. Each of these systems includes a terminal device and a network device. Each system further includes a core network part, e.g., an Evolved Packet System (EPS) or 5G system (5GS).

The terminal device involved in the embodiments of the present disclosure may be referred to as a terminal device, which may be a device for providing voice data and/or any other service data to a user, e.g., a handheld device having a wireless connection function, or any other processing device capable of being connected to a wireless modem. In different systems, the terminal device may have different names. For example, in a 5G system, the terminal device is called as user equipment (UE). A wireless terminal device communicates with one or more Core Networks (CNs) via a Radio Access Network (RAN). The wireless terminal device may be a mobile terminal, e.g., a mobile phone (or cellular phone), or a computer having the mobile terminal device, e.g., a portable, pocket-sized, handheld, built-in or vehicle-mounted mobile device, which are capable of exchanging voice and/or data with the RAN. For example, the wireless terminal device may be a Personal Communication Service (PCS) telephone, a cordless telephone, a Session Initiation Protocol (SIP) phone, a Wireless Local Loop (WLL) station, or a Personal Digital Assistant (PDA). In addition, the wireless terminal device may also be called as system, subscriber unit, subscriber station, mobile station, mobile, remote station, access point, remote terminal, access terminal, user terminal, user agent or user device, which will not be particularly defined herein.

The network device involved in the embodiment of the present disclosure may be a base station which includes a plurality of cells providing services for the UE. Depending on different application scenarios, the base station is called as an access point, a device in an access network in communication with the wireless terminal device through one or more sectors on an air interface, or any other name. The network device is used to exchange a received air frame with an Internet Protocol (IP) packet, and it serves as a router between the wireless terminal device and the other part of the access network. The other part of the access network includes an IP communication network. The network device may further coordinate attribute management on the air interface. For example, the network device involved in the embodiments of the present disclosure is a Base Transceiver Station (BTS) in the Global System for Mobile communications (GSM) or Code Division Multiple Access (CDMA) system, a NodeB in the Wide-band Code Division Multiple Access (WCDMA) system, an evolutional Node B (eNB, or e-NodeB) in the LTE system, a 5G base station (gNB) in 5G network architecture (next generation system), a Home evolved Node B (HeNB), a relay node, a femto, or a pico, which will not be particularly defined herein. In some network structures, the network device includes a Centralized Unit (CU) and a Distributed Unit (DU), which may be geographically separated from each other.

Each of the network device and the terminal can use one or more antennas for multi input multi output (MIMO) transmission between the network device and the terminal. The MIMO transmission may be single user MIMO (SU-MIMO), or multiple user MIMO (MU-MIMO). According to forms and numbers of antenna combinations, MIMO transmission may be two dimensional-MIMO (2D-MIMO), three dimensional-MIMO (3D-MIMO), full dimensional-MIMO (FD-MIMO), or massive-MIMO, or diversity transmission, precoding transmission, or beamforming transmission.

A person skilled in the art should understand that the embodiments of the present application may be provided as methods, systems, or computer program products. Therefore, the present application may adopt the form of complete hardware embodiments, complete software embodiments, or embodiments combining software and hardware aspects. Moreover, the present application may adopt the form of a computer program product implemented on one or more computer available storage media (including but not limited to a disk storage, an optical storage, etc.) containing computer available program code.

The present application is described with reference to flowcharts and/or block diagrams of methods, devices (systems), and computer program products according to the embodiments of the present application. It is to be understood that each process and/or block in the flowchart and/or block diagram, and the combination of processes and/or blocks in the flowchart and/or block diagram may be implemented by computer executable instructions. These computer executable instructions may be provided to a general-purpose computer, a special-purpose computer, an embedded processor, or a processor of other programmable data processing device to generate a machine, so that a device, which is configured to implement functions specified in one process or multiple processes in the flowchart and/or one block or multiple blocks in the block diagram, is generated through the instructions executed by the computer or the processor of other programmable data processing device.

These processor executable instructions may be stored in a processor readable memory that may guide a computer or other programmable data processing device to operate in a specific manner, so that the instructions stored in the processor readable memory generate a product including an instruction device. The instruction device implements the functions specified in one process or multiple processes in the flowchart and/or one block or multiple blocks in the block diagram. These processor executable instructions may be loaded in a computer or other programmable data processing device, to enable a series of operation steps to be executed on the computer or other programmable equipment to realize computer-implemented processing, so that the instructions executed on the computer or other programmable device provide steps for implementing functions specified in a process or multiple processes in the flowchart and/or a block or multiple blocks in the block diagram.

It is to be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, a determining module may be a separate processing element, or may be integrated into a certain chip of the above device, or, may be stored in the memory of the above device in the form of program code, and a certain processing element of the above device may call and execute the functions of the determining module. Other modules have similar implementations. In addition, all or part of these modules may be integrated together, and may be implemented independently. The processing element mentioned herein may be an integrated circuit with signal processing capability. In the implementation process, the various steps of the above method or the above various modules may be implemented by an integrated logic circuit in hardware form in elements of a processor or implemented by instructions in the form of software.

For example, the various modules, units, subunits or submodules may be one or more integrated circuits used to implement the above methods, such as one or more application specific integrated circuits (Application Specific Integrated Circuit, ASIC), or one or more microprocessors (Digital Signal Processor, DSP), or one or more field programmable gate arrays (Field Programmable Gate Array, FPGA), etc. As another example, when a module described above is implemented in the form of scheduling program codes by a processing element, the processing element may be a general-purpose processor, such as a central processing unit (Central Processing Unit, CPU) or other processors that may call program codes. As another example, these modules may be integrated together and implemented as a system-on-a-chip (system-on-a-chip, SOC).

Terms such as "first" and "second" in the specification and the claims of the present application are used to distinguish similar objects and are not necessarily used to describe a specific order or sequence. It is to be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device.

Obviously, those skilled in the art can make various changes and modifications to the present application without departing from the spirit and scope of the present application. Thus, if these modifications and variations of the present application fall within the scope of the claims of the present application and equivalent technologies thereof, the present application also intends to include these modifications and variations.

**Claims**

1. A cyclic prefix extension method, comprising:

   receiving, by a user equipment (UE), relevant information of a cyclic prefix (CP) extension and/or information of frequency domain reserved resources of a first OFDM symbol, transmitted by a network device; wherein the relevant information of the CP extension is used to indicate a target OFDM symbol for the CP extension and a CP extension increment, and the first OFDM symbol is adjacent to the target OFDM symbol; and
   performing, by the UE, data transmission according to the relevant information of the CP extension and/or the information of the frequency domain reserved resources of the first OFDM symbol.

2. The method according to claim 1, wherein the relevant information of the CP extension includes at least one of the following:

   information indicating the target OFDM symbol for the CP extension;
   CP extension increment;
   length of an extended CP.

3. The method according to claim 1, wherein the receiving, by a user equipment (UE), relevant information of a cyclic prefix (CP) extension and/or information of frequency domain reserved resources of a first OFDM symbol, transmitted by a network device, includes:
   receiving a high layer signaling and/or a scheduling signaling transmitted by the network device, wherein the high layer signaling and/or the scheduling signaling carries the relevant information of the CP extension and/or the information of frequency domain reserved resources of the first OFDM symbol.

4. The method according to claim 1, wherein the performing, by the UE, data transmission according to the relevant information of the CP extension and/or the information of the frequency domain reserved resources of the first OFDM symbol, includes:
   determining that the frequency domain reserved resources are not used for downlink transmission or uplink transmission according to the information of the frequency domain reserved resources of the first OFDM symbol.

5. The method according to claim 1, wherein the performing, by the UE, data transmission according to the relevant information of the CP extension, includes:
   adjusting a starting position for receiving the target OFDM symbol according to the CP extension increment.

6. The method according to claim 5, wherein the starting position for receiving the target OFDM symbol is a position obtained by shifting a reception starting position determined according to a normal CP backward by M time-domain positions;
   wherein M is the CP extension increment.

7. A cyclic prefix extension method, comprising:

   transmitting, by a network device, relevant information of a cyclic prefix (CP) extension and/or information of frequency domain reserved resources of a first OFDM symbol, to a user equipment (UE);
   wherein the relevant information of the CP extension is used to indicate a target OFDM symbol for the CP extension and a CP extension increment, and the first OFDM symbol is adjacent to the target OFDM symbol.

8. The method according to claim 7, wherein the transmitting, by a network device, relevant information of a cyclic prefix (CP) extension and/or information of frequency domain reserved resources of a first OFDM symbol, to a user equipment (UE), includes:
   transmitting a high-layer signaling and/or a scheduling signaling to the UE, wherein the high-layer signaling and/or the scheduling signaling carries the relevant information of the CP extension and/or the information of frequency domain reserved resources of the first OFDM symbol.

9. The method according to claim 7, wherein the first OFDM symbol is an adjacent symbol following a time domain position of the target OFDM symbol, and values of M first time domain positions of the first OFDM symbol are the same as values of first M time domain positions of the target OFDM symbol;
   or,

   the first OFDM symbol is an adjacent symbol before a time domain position of the target OFDM symbol, and values of last M time domain positions of the first OFDM symbol are the same as values of M second time domain positions of the target OFDM symbol;
   wherein M is the CP expansion increment.

10. The method according to claim 9, wherein the M first time domain positions include one of the following:

    first M time domain positions of the first OFDM symbol after adding CP according to a quantity of a normal CP;
    when M is less than or equal to A, the M first time domain positions include: a time domain position of first data and subsequent M-1 time domain positions, and the first data is data whose sequence number is a difference between a total length of a data sequence and A;
    when M is greater than A, first to A-th time domain positions in M include: a time domain position of first data and subsequent A-1 time domain positions, the first data is data whose sequence number is a difference between a total length of a data sequence and A; (A+1)-th to M-th time domain positions in M are: first (M-A) time domain positions;
    wherein A is the number of sample points of a normal CP.

11. The method according to claim 9, wherein the M second time domain positions include:
    a difference between a total length of a data sequence and a total length of an extended CP, and time domain positions of subsequent M-1 data.

12. The method according to claim 7, wherein values of the frequency domain reserved resources are determined in a way including:

    selecting M1 frequency domain reserved resource positions from N frequency domain positions, wherein M1 is greater than or equal to 0;
    according to M known data and transformation formula, determining one or more sets of numerical solutions, wherein each set of numerical solutions corresponds to a resource position combination;
    if there is one set of numerical solutions, determining the set of numerical solutions as the values of the frequency domain reserved resources; if there are multiple sets of the numerical solutions, determining one sets of numerical solutions that meets a first condition in the multiple sets of numerical solutions as the values of the frequency domain reserved resources;
    wherein M is the CP extension increment, and the M known data are values of M time domain positions, shared between the first OFDM symbol and the target OFDM symbol.

13. The method according to claim 12, wherein the first condition includes at least one of the following:

    moduli of all values in one set of numerical solutions are smaller than a first threshold;
    an average value of moduli of all numerical values in one set of numerical solutions is less than a second threshold.

14. The method according to claim 12, wherein distribution of the M1 frequency domain reserved resources includes at least one of the following situations:

the M1 frequency-domain reserved resources are distributed within a transmissible bandwidth;
the M1 frequency-domain reserved resources are distributed within a guard band, and a signal power of the M1 frequency-domain reserved resources is less than a third threshold;
the M1 frequency-domain reserved resources are distributed outside the bandwidth, and a signal power of the M1 resources is less than a fourth threshold.

15. The method according to claim 7, wherein the relevant information of the CP extension is determined in a way including:

determining the CP extension increment; wherein the CP extension increment is an increment relative to a quantity of a normal CP;
determining the relevant information of the CP extension according to the CP extension increment.

16. The method according to claim 7, wherein the frequency domain reserved resources of the first OFDM symbol are not used for downlink transmission or uplink transmission.

17. A user equipment (UE), comprising: a memory, a transceiver, and a processor;
wherein the memory is used to store a computer program; the transceiver is used to receive and send data under control of the processor; the processor is used to read the computer program in the memory and perform the following operations:

receiving relevant information of a cyclic prefix (CP) extension and/or information of frequency domain reserved resources of a first OFDM symbol, transmitted by a network device; wherein the relevant information of the CP extension is used to indicate a target OFDM symbol for the CP extension and a CP extension increment, and the first OFDM symbol is adjacent to the target OFDM symbol;
performing data transmission according to the relevant information of the CP extension and/or the information of the frequency domain reserved resources of the first OFDM symbol.

18. The UE according to claim 17, wherein the processor is used to read the computer program in the memory and perform the following operations:
determining that the frequency domain reserved resources are not used for downlink transmission or uplink transmission according to the information of the frequency domain reserved resources of the first OFDM symbol.

19. The UE according to claim 17, wherein the processor is used to read the computer program in the memory and perform the following operations:
adjusting a starting position for receiving the target OFDM symbol according to the CP extension increment.

20. The UE according to claim 19, wherein the starting position for receiving the target OFDM symbol is a position obtained by shifting a reception starting position determined according to a normal CP backward by M time-domain positions; wherein M is the CP extension increment.

21. A network device, comprising: a memory, a transceiver, and a processor;
wherein the memory is used to store a computer program; the transceiver is used to receive and send data under control of the processor; the processor is used to read the computer program in the memory and perform the following operations:

transmitting relevant information of a cyclic prefix (CP) extension and/or information of frequency domain reserved resources of a first OFDM symbol, to a user equipment (UE);
wherein the relevant information of the CP extension is used to indicate a target OFDM symbol for the CP extension and a CP extension increment, and the first OFDM symbol is adjacent to the target OFDM symbol.

22. The device according to claim 21, wherein the first OFDM symbol is an adjacent symbol following a time domain position of the target OFDM symbol, and values of M first time domain positions of the first OFDM symbol are the same as values of first M time domain positions of the target OFDM symbol;
or,

the first OFDM symbol is an adjacent symbol before a time domain position of the target OFDM symbol, and values of last M time domain positions of the first OFDM symbol are the same as values of M second time domain positions of the target OFDM symbol;
wherein M is the CP expansion increment.

23. The device according to claim 22, wherein the M first time domain positions include one of the following:

first M time domain positions of the first OFDM symbol after adding CP according to a quantity of a normal CP;
when M is less than or equal to A, the M first time domain positions include: a time domain position of first data and subsequent M-1 time domain positions, and the first data is data whose sequence number is a difference between a total length of a data sequence and A;
when M is greater than A, first to A-th time domain positions in M include: a time domain position of first data and subsequent A-1 time domain positions, the first data is data whose sequence number is a difference between a total length of a data sequence and A; (A+1)-th to M-th time domain positions in M are: first (M-A) time domain positions;
wherein A is the number of sample points of a normal CP.

24. The device according to claim 22, wherein the M second time domain positions include:
a difference between a total length of a data sequence and a total length of an extended CP, and time domain positions of subsequent M-1 data.

25. The device according to claim 21, wherein the processor is used to read the computer program in the memory and perform the following operations:

selecting M1 frequency domain reserved resource positions from N frequency domain positions, wherein M1 is greater than or equal to 0;
according to M known data and transformation formula, determining one or more sets of numerical solutions, wherein each set of numerical solutions corresponds to a resource position combination;
if there is one set of numerical solutions, determining the set of numerical solutions as the values of the frequency domain reserved resources; if there are multiple sets of the numerical solutions, determining one sets of numerical solutions that meets a first condition in the multiple sets of numerical solutions as the values of the frequency domain reserved resources;
wherein M is the CP extension increment, and the M known data are values of M time domain positions, shared between the first OFDM symbol and the target OFDM symbol.

26. The device according to claim 21, wherein the processor is used to read the computer program in the memory and perform the following operations:

determining the CP extension increment; wherein the CP extension increment is an increment relative to a quantity of a normal CP;
determining the relevant information of the CP extension according to the CP extension increment.

27. A cyclic prefix extension device, comprising:

a first receiving unit used to receive relevant information of a cyclic prefix (CP) extension and/or information of frequency domain reserved resources of a first OFDM symbol, transmitted by a network device; wherein the relevant information of the CP extension is used to indicate a target OFDM symbol for the CP extension and a CP extension increment, and the first OFDM symbol is adjacent to the target OFDM symbol;
a transmission unit used to perform data transmission according to the relevant information of the CP extension and/or the information of the frequency domain reserved resources of the first OFDM symbol.

28. The device according to claim 27, wherein the transmission unit is specifically used to:
determine that the frequency domain reserved resources are not used for downlink transmission or uplink transmission according to the information of the frequency domain reserved resources of the first OFDM symbol.

**29.** The device according to claim 27, wherein the transmission unit is specifically used to:
adjust a starting position for receiving the target OFDM symbol according to the CP extension increment.

**30.** The device according to claim 29, wherein the starting position for receiving the target OFDM symbol is a position obtained by shifting a reception starting position determined according to a normal CP backward by M time-domain positions;
wherein M is the CP extension increment.

**31.** A cyclic prefix extension device, comprising:

a first transmission unit used to transmit relevant information of a cyclic prefix (CP) extension and/or information of frequency domain reserved resources of a first OFDM symbol, to a user equipment (UE);
wherein the relevant information of the CP extension is used to indicate a target OFDM symbol for the CP extension and a CP extension increment, and the first OFDM symbol is adjacent to the target OFDM symbol.

**32.** The device according to claim 31, wherein the first OFDM symbol is an adjacent symbol following a time domain position of the target OFDM symbol, and values of M first time domain positions of the first OFDM symbol are the same as values of first M time domain positions of the target OFDM symbol;
or,

the first OFDM symbol is an adjacent symbol before a time domain position of the target OFDM symbol, and values of last M time domain positions of the first OFDM symbol are the same as values of M second time domain positions of the target OFDM symbol;
wherein M is the CP expansion increment.

**33.** The device according to claim 32, wherein the M first time domain positions include one of the following:

first M time domain positions of the first OFDM symbol after adding CP according to a quantity of a normal CP;
when M is less than or equal to A, the M first time domain positions include: a time domain position of first data and subsequent M-1 time domain positions, and the first data is data whose sequence number is a difference between a total length of a data sequence and A;
when M is greater than A, first to A-th time domain positions in M include: a time domain position of first data and subsequent A-1 time domain positions, the first data is data whose sequence number is a difference between a total length of a data sequence and A; (A+1)-th to M-th time domain positions in M are: first (M-A) time domain positions;
wherein A is the number of sample points of a normal CP.

**34.** The device according to claim 32, wherein the M second time domain positions include:
a difference between a total length of a data sequence and a total length of an extended CP, and time domain positions of subsequent M-1 data.

**35.** A processor-readable storage medium, comprising: a computer program stored thereon; wherein the computer program is used to cause a processor to execute steps of the method according to any one of claims 1 to 6, or to execute steps of the method according to any one of claims 7 to 16.

FIG. 1

| cell-level SFN | 1-cell | 3-cell | 12-cell | 27-cell |
|---|---|---|---|---|
| received power | 1.00 | 3.00 | 4.42 | 4.94 |
| gain（dB) | 0.00 | 4.77 | 6.45 | 6.94 |

FIG. 2

start

receiving, by UE, relevant information of a CP extension and/or information of frequency domain reserved resources of a first OFDM symbol, transmitted by a network device    ⟍ 301

performing, by the UE, data transmission according to the relevant information of the CP extension and/or the information of the frequency domain reserved resources of the first OFDM symbol    ⟍ 302

end

FIG. 3

assume NCP before extension is 2; extension amount M=4, length of an extended CP is 6

① IDFT operation-IDFT output of OFDM symbol n    DFT output of OFDM symbol n+1

x0 x1  x2 x3
| 1 | 2 | 3 | 4 | 5 | 6 | 7 | 8 |

x0 x1                    x6 x7
| 3 | 4 | c | d | e | f | 1 | 2 |

make them equal

make them equal

② add CP and transmit

CP1          IDFT-1          CP2          IDFT-2
| 7 | 8 | 1 | 2 | 3 | 4 | 5 | 6 | 7 | 8 | 1 | 2 | 3 | 4 | c | d | e | f | 1 | 2 |

CP before extension

extended CP

FIG. 4

FIG. 5

FIG. 6

① IDFT operation

IDFT output of symbol 1    IDFT output of symbol 2    IDFT output of symbol 3

| 1 | 2 | 3 | 4 | 5 | 6 | 7 | 8 |   | a | b | c | d | e | f | **1** | h |   | I | J | K | L | M | N | a | p |

make them equal          make them equal

② add CP and transmit

CP1        IDFT-1          CP2           IDFT-2         CP3          IDFT-3

| 7 | 8 | 1 | 2 | 3 | 4 | 5 | 6 | 7 | 8 | 1 | h | a | b | c | d | e | f | 1 | h | a | p | I | J | K | L | M | N | a | P |

FIG. 7

③ UE-side reception

symbol n original DFT    symbol n+1 original DFT    symbol n+3 original DFT

CP1                          CP2                          CP3

| 7 | 8 | 1 | 2 | 3 | 4 | 5 | 6 | 7 | 8 | 1 | h | a | b | c | d | e | f | 1 | h | a | p | I | J | K | L | M | N | a | P |

| 7 | 8 | 1 | 2 | 3 | 4 | 5 | 6 | 7 | 8 | 1 | h | a | b | c | d | e | f | 1 | h | a | p | I | J | K | L | M | N | a | P |

reception DFT input window    reception DFT input window

FIG. 8

FIG. 9

FIG. 10

① IDFT operation

IDFT-1 | IDFT-2 | IDFT-3

| 1 | 2 | 3 | 4 | 5 | 6 | 7 | 8 |

| 3 | b | c | d | e | f | **1** | 2 |

| c | J | K | L | M | N | 3 | b |

make them equal

make them equal

make them equal

make them equal

② add CP and transmit

CP1 | IDFT-1 | CP2 | IDFT-2 | CP3 | IDFT-3

| 7 | 8 | 1 | 2 | 3 | 4 | 5 | 6 | 7 | 8 | 1 | 2 | 3 | b | c | d | e | f | 1 | 2 | 3 | b | c | J | K | L | M | N | 3 | b |

FIG. 11

③ UE-side reception

original DFT-1 | original DFT-2 | IDFT-3

CP1 | CP2 | CP3

| 7 | 8 | 1 | 2 | 3 | 4 | 5 | 6 | 7 | 8 | 1 | 2 | 3 | b | c | d | e | f | 1 | 2 | 3 | b | c | J | K | L | M | N | 3 | b |

| 7 | 8 | 1 | 2 | 3 | 4 | 5 | 6 | 7 | 8 | 1 | 2 | 3 | b | c | d | e | f | 1 | 2 | 3 | b | c | J | K | L | M | N | 3 | b |

$\tau = 5$

reception DFT window | reception DFT window

FIG. 12

original CP length is 144  224= 368-144

time-domain data of symbol n

$x_0,\quad x_1, \ldots x_{143},\quad x_{144}\ldots x_{366}, x_{367}\ldots x_{1903},\quad x_{1904}\ldots x_{2047},$

224 data are identical

144 data are identical

time-domain data of symbol n+1

$x_0,\quad x_1, \ldots x_{143},\quad x_{144}\ldots x_{223}, x_{224}\ldots x_{1903},\quad x_{1904}\ldots x_{2047},$

FIG. 13

RE=2047

out-of-band frequency (694 RE)

guard band frequency (12 RE)

communication frequency (636RE)

guard band frequency (12 RE)

out-of-band frequency (694 RE)

RE=0

FIG. 14

FIG. 15

FIG. 16

FIG. 17

FIG. 18

FIG. 19

FIG. 20

FIG. 21

FIG. 22

first receiving unit 2310

transmission unit 2320

2300

FIG. 23

first transmission unit 2410

2400

FIG. 24

processor 2510

memory 2520

bus interface

transceiver 2500

user interface 2530

FIG. 25

2610

processor

2620

memory

bus interface

2600

transceiver

FIG. 26

# EP 4 746 359 A1

## INTERNATIONAL SEARCH REPORT

International application No.

**PCT/CN2024/104412**

### A. CLASSIFICATION OF SUBJECT MATTER

H04L 27/26(2006.01)i

According to International Patent Classification (IPC) or to both national classification and IPC

### B. FIELDS SEARCHED

Minimum documentation searched (classification system followed by classification symbols)

IPC:H04L H04B H04W

Documentation searched other than minimum documentation to the extent that such documents are included in the fields searched

Electronic data base consulted during the international search (name of data base and, where practicable, search terms used)

CNTXT, ENTXT, CNABS, CNKI, 3GPP: 循环前缀, 扩展, 长度, 指示, 频域, 资源, 增, 保留, 位置, 邻, cyclic prefix, CP, extension, ECP, length, indication, frequency, domain, resource, add, reserve, location, position, neighbour, OFDM

### C. DOCUMENTS CONSIDERED TO BE RELEVANT

| Category* | Citation of document, with indication, where appropriate, of the relevant passages | Relevant to claim No. |
|---|---|---|
| X | CN 115915446 A (DATANG MOBILE COMMUNICATIONS EQUIPMENT CO., LTD.) 04 April 2023 (2023-04-04) description, paragraphs [0285]-[0525] | 1-35 |
| A | CN 108282430 A (HUAWEI TECHNOLOGIES CO., LTD.) 13 July 2018 (2018-07-13) entire document | 1-35 |
| A | CN 114041274 A (NOKIA TECHNOLOGIES OY) 11 February 2022 (2022-02-11) entire document | 1-35 |
| A | US 2022408494 A1 (QUALCOMM INC.) 22 December 2022 (2022-12-22) entire document | 1-35 |

☐ Further documents are listed in the continuation of Box C.   ☑ See patent family annex.

| | |
|---|---|
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **08 October 2024** | **11 October 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/104412**

| Patent document cited in search report | | | Publication date (day/month/year) | Patent family member(s) | | | Publication date (day/month/year) |
|---|---|---|---|---|---|---|---|
| CN | 115915446 | A | 04 April 2023 | WO | 2023040582 | A1 | 23 March 2023 |
| CN | 108282430 | A | 13 July 2018 | None | | | |
| CN | 114041274 | A | 11 February 2022 | WO | 2020222180 | A1 | 05 November 2020 |
| | | | | EP | 3963799 | A1 | 09 March 2022 |
| | | | | US | 2022225258 | A1 | 14 July 2022 |
| US | 2022408494 | A1 | 22 December 2022 | WO | 2021086824 | A1 | 06 May 2021 |
| | | | | JP | 2023501127 | A | 18 January 2023 |
| | | | | KR | 20220089697 | A | 28 June 2022 |
| | | | | BR | 112022007559 | A2 | 05 July 2022 |
| | | | | EP | 4052404 | A1 | 07 September 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310856062